# EUROPEAN PATENT APPLICATION

(11) **EP 1 357 554 A2**
(43) Date of publication of application: **29.10.2003**
(21) Application number: 03252119.7
(22) Date of filing: 03.04.2003
(51) Int. Cl.: G11B 20/12, G11B 20/10

(54) **Recording aparatus and method, and program and recording medium used therewith**

(30) Priority: 05.04.2002 JP 2002104496; 03.12.2002 JP 2002351139
(71) Applicant: SONY CORPORATION, Tokyo 141 (JP)
(72) Inventor: Furukawa, Takashi c/o Sony Corporation, Shinagawa-Ku Tokyo (JP); Tanaka, Hisao c/o Sony Corporation, Shinagawa-Ku Tokyo (JP); Ando, Hideki c/o Sony Corporation, Shinagawa-Ku Tokyo (JP); Katsuo, Satoshi c/o Sony Corporation, Shinagawa-Ku Tokyo (JP); Hirose, Masaki c/o Sony Corporation, Shinagawa-Ku Tokyo (JP); Kawamura, Takayoshi c/o Sony Corporation, Shinagawa-ku Tokyo (JP); Terao, Motohiro c/o Sony Corporation, Shinagawa-Ku Tokyo (JP)
(74) Representative: DeVile, Jonathan Mark, Dr.

(57) **Abstract**

A recording control apparatus and method for recording audio data in an arbitrary integer number of sectors, the number sectors being one or greater. Video data is recorded in an arbitrary integer number of consecutive sectors following the sectors for the audio data. For example, audio data is recorded in sector #1, video data is recorded in subsequent sectors #2, #3, #4, and #5, and audio data is recorded in subsequent sectors #6 and #7. The audio data and the video data are recorded on an optical disk in annual-ring form. The present invention can be applied to, a disk drive for driving an optical disk.

## Description

### BACKGROUND OF THE INVENTION

### 1. Field of the Invention

The present invention relates to recording control apparatus and methods, and programs and recording media used therewith.

### 2. Description of the Related Art

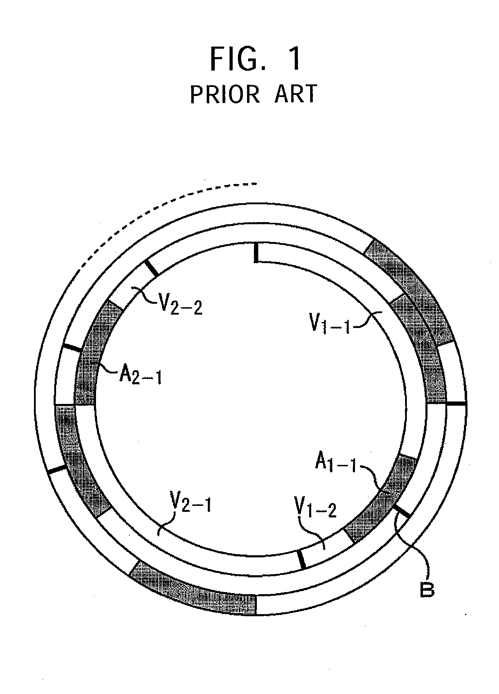

As Fig. 1 shows, in a conventional recording method, audio data items A (shaded portions in Fig. 1) and video data items V (blank portions in Fig. 1) are together recorded, for example, in a sector as a physical recording/playback unit formed on a recording medium such as an optical disk. In Fig. 1, thick-line partitions indicate sector boundaries. The audio data items A are played back in the order of audio-data items A₁₋₁ and A₂₋₁, and the video data items V are played back in the order of video-data items V₁₋₁, V₁₋₂, V₂₋₁, and V₂₋₂.

In the conventional recording method, the audio-data items A₁₋₁ and A₂₋₁ and the video-data items V₁₋₁, V₁₋₂ , V₂₋₁, and V₂₋₂, each of which has small size, are arranged in the discrete free areas of the sectors. Thus, in the case of performing editing for replacing, for example, all or one of the audio-data items A₁₋₁ and A₂₋₁ by another audio data item A, for example, in the case of overwriting the audio-data items A₁₋₁ and A₂₋₁ by another audio data item A, not only the audio-data items A₁₋₁ and A₂₋₁ but also the video-data items V₁₋₁, V₁₋₂, V₂₋₁, and V₂₋₂, which are not required for the editing, are read since data reading is performed in units of sectors from the inner circumferential side to outer circumferential side of the recording medium. In other words, for the reading of unnecessary video signals having larger amounts of data than those of audio signals, it is difficult to perform rapid editing.

Accordingly, for example, Japanese Unexamined Patent Application Publication No. 11-98447 discloses that, by recording video data and audio data in concentrically divided recording areas on an optical disk, each of the video data and the audio data can be recorded, to some extent, in consecutive form.

In addition, it is preferable that a pattern for recording data onto an optical disk or the like be matched with uses and purposes of use of the optical disk.

### SUMMARY OF THE INVENTION

Various aspects and features of the present invention are defined in the appended claims.

The present invention is made in view of the above circumstances. Embodiments of the present invention seek to increase the level of convenience of a recording medium, such as enabling rapid editing.

Embodiments of the present invention relate to a recording control apparatus and method in which, for example, editing can be rapidly performed, and a program recording medium used therewith.

According to an aspect of the present invention, a recording control apparatus for controlling recording of two or more data series on a recording medium is provided. The recording control apparatus includes a data extraction unit for extracting, from the two or more data series, predetermined amounts of data each of which is an integral multiple of the amount of data in one physical unit area on the recording medium, and a recording control unit for controlling recording, on the recording medium, of the predetermined amounts of data from the two or more data series so that the boundaries of each of the predetermined amounts of data match the boundaries of the physical unit area, and so that the predetermined amounts of data are disposed in a predetermined pattern.

According to another aspect of the present invention, a recording control apparatus for controlling recording of two or more data series on a recording medium is provided. The recording control apparatus includes a data extractor for extracting, from the two or more data series, predetermined amounts of data each of which is a integral multiple of the amount of data in one physical unit area on the recording medium, and a recording controller for controlling recording, on the recording medium, of the predetermined amounts of data from the two or more data series so that the boundaries of each of the predetermined amounts of data match the boundaries of the physical unit area, and so that the predetermined amounts of data are disposed in a predetermined pattern.

According to another aspect of the present invention, a recording control method for controlling recording of two or more data series on a recording medium is provided. The recording control method includes the steps of extracting, from the two or more data series, predetermined amounts of data each of which is a multiple of the amount of data in one physical unit area on the recording medium, and controlling recording, on the recording medium, of the predetermined amounts of data from the two or more data series so that the boundaries of each of the predetermined amounts of data match the boundaries of the physical unit area, and so that the predetermined amounts of data are disposed in a predetermined pattern.

According to another aspect of the present invention, a recording medium having two or more data series recorded thereon is provided. On the recording medium, predetermined amounts of data which are extracted from the two or more data series and each of which is an integral multiple of the amount of data in one physical unit area on the recording medium are recorded so that the boundaries of each of the predetermined amounts of data match the boundaries of the physical unit area, and so that the predetermined amounts of data are disposed in a predetermined pattern.

According to another aspect of the present invention, a recording control apparatus for controlling recording of a first data series and a second data series on a recording medium is provided. The recording control apparatus includes a first data extraction unit for extracting, from the first data series, a first amount of data based on the amount of data required for playback in a first playback period, a second data extraction unit for extracting, from the second data series, a second amount of data based on the amount of data required for playback in a second playback period different from the first playback period, and a recording control unit for controlling recording, on the recording medium, of the first amount of data from the first data series and the second amount of data from the second data series in a predetermined pattern.

According to another aspect of the present invention, recording control apparatus for controlling recording of a first data series and a second data series on a recording medium is provided. The recording control apparatus includes a first data extractor for extracting, from the first data series, a first amount of data based on the amount of data required for playback in a first playback period, a second data extractor for extracting, from the second data series, a second amount of data based on the amount of data required for playback in a second playback period different from the first playback period, and a recording controller for controlling recording, on the recording medium, of the first amount of data from the first data series and the second amount of data from the second data series in a predetermined pattern.

According to another aspect of the present invention, a recording control method for controlling recording of a first data series and a second data series on a recording medium is provided. The recording control method includes the steps of extracting, from the first data series, a first amount of data based on the amount of data required for playback in a first playback period, extracting, from the second data series, a second amount of data based on the amount of data required for playback in a second playback period different from the first playback period, and controlling recording, on the recording medium, of the first amount of data from the first data series and the second amount of data from the second data series in a predetermined pattern.

According to another aspect of the present invention, a program for causing a computer to perform controlling recording of a first data series and a second data series on a recording medium is provided. The program includes the steps of extracting, from the first data series, a first amount of data based on the amount of data required for playback in a first playback period, extracting, from the second data series, a second amount of data based on the amount of data required for playback in a second playback period different from the first playback period, and controlling recording, on the recording medium, of the first amount of data from the first data series and the second amount of data from the second data series in a predetermined pattern.

According to another aspect of the present invention, a recording medium having first and second data series recorded thereon is provided. On the recording medium, a first amount of data which is extracted from the first data series and which is based on the amount of data required for playback in a first playback period, and a second amount of data which is extracted from the second data series and which is based on the amount of data required for playback in a second playback period different from the first playback period are recorded in a predetermined pattern.

### BRIEF DESCRIPTION OF THE DRAWINGS

The invention will now be described by way of example with reference to the accompanying drawings, throughout which like parts are referred to by like references, and in which:
Fig. 1 is an illustration of a conventional recording method;
Fig. 2 is a block diagram showing an example of a disk recording/playback apparatus 10 to which the present invention is applied;
Fig. 3 is a block diagram showing an example of the data converter 19 shown in Fig. 2;
Fig. 4 is a flowchart illustrating a recording process of the controller 20 shown in Fig. 2;
Fig. 5 is a flowchart illustrating an audio-data recording task;
Fig. 6 is a graph showing a change in the total amount La of audio data and a change in the total amount Lv of video data;
Fig. 7 is an illustration of a state in which audio data and video data are recorded on the optical disk 11 shown in Fig. 2;
Fig. 8 is a flowchart illustrating a video-data recording task;
Fig. 9 is a graph a change in the total amount La of audio data and a change in the total amount Lv of video data;
Fig. 10 is an illustration of a state in which audio data and video data are recorded on the optical disk 11 shown in Fig. 2;
Fig. 11 is an illustration of seek operations;
Fig. 12 is an illustration of another state in which audio data and video data are recorded on the optical disk 11 shown in Fig. 2;
Fig. 13 is a graph showing total amounts of data read from or written in the memory 18 shown in Fig. 2;
Fig. 14 is a graph showing total amounts of data read from or written in the memory 18 shown in Fig. 2;
Fig. 15 is a graph showing the total amount of data read from or written in the memory 18 shown in Fig. 2;
Fig. 16 is a block diagram showing another example of the data converter 19 shown in Fig. 2;
Fig. 17 is a flowchart illustrating a recording process of the controller 20 shown in Fig. 2;
Fig. 18 is a flowchart illustrating an audio-data recording task;
Fig. 19 is a flowchart illustrating a video-data recording task;
Fig. 20 is a flowchart illustrating a low-resolution-data recording task;
Fig. 21 is a flowchart illustrating a meta-data recording task;
Fig. 22 is a graph showing the total amounts of data stored in the memory 18 shown in Fig. 2;
Fig. 23 is a graph showing the total amounts of data stored in the memory 18 shown in Fig. 2;
Fig. 24 is a graph showing the total amounts of data stored in the memory 18 shown in Fig. 2;
Fig. 25 is a graph showing the total amounts of data stored in the memory 18 shown in Fig. 2;
Fig. 26 is a graph showing the total amounts of data stored in the memory 18 shown in Fig. 2;
Fig. 27 is an illustration of a state in which data series are recorded on the optical disk 11 shown in Fig. 2;
Figs. 28A and 28B are illustrations of states in which data is read from or written on the optical disk 11 shown in Fig. 2;
Figs. 29A, 29B, and 29C are illustrations of data recorded on the optical disk 11 shown in Fig. 2; and
Fig. 30 is a block diagram showing an example of a personal computer 101.

### DESCRIPTION OF THE PREFERRED EMBODIMENTS

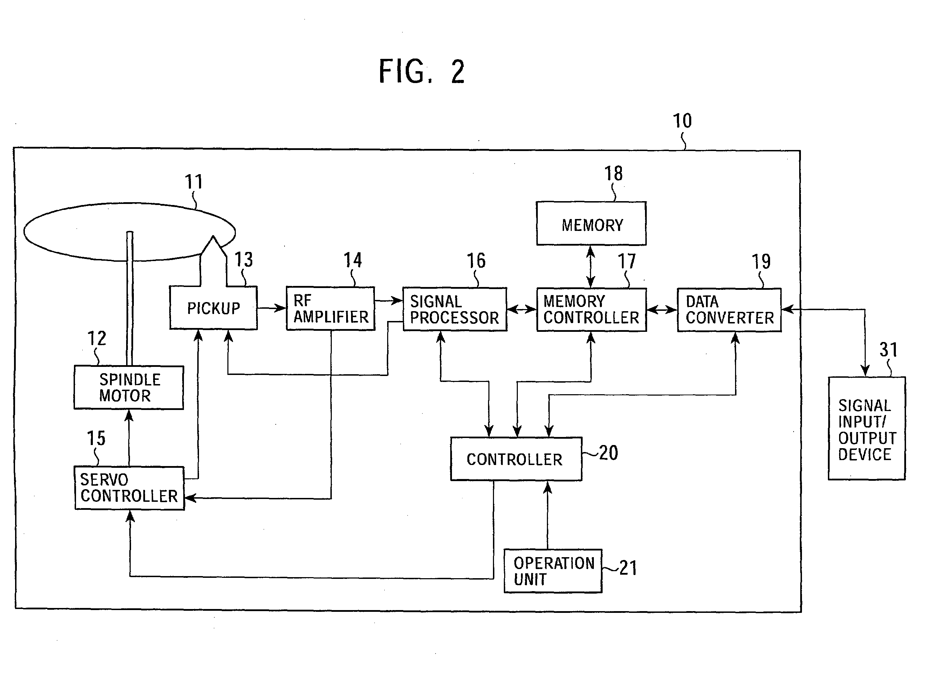

Fig. 2 shows an example of a disk recording/playback apparatus (disk drive) 10 to which the present invention is applied. In the present invention, the disk recording/playback apparatus 10 may be either a disk recording apparatus or a disk playback apparatus.

Based on a spindle-motor driving signal from a servo controller 15, a spindle motor 12 rotates an optical disk 11 at a velocity such as a constant linear velocity or a constant angular velocity.

By controlling, based on a recording signal supplied from a signal processor 16, the output of a laser beam, a pickup 13 records the recording signal on the optical disk 11. Also, the pickup 13 emits the laser beam to converge on the optical disk 11, generates a current signal by performing photoelectric conversion on a reflected beam from the optical disk 11, and supplies the current signal to a radio frequency (RF) amplifier 14. A position in which the laser beam is emitted onto the optical disk 11 is controlled by a servo signal supplied from the servo controller 15 to the pickup 13.

Based on the current signal from the pickup 13, the RF amplifier 14 generates a focusing error signal, a tracking error signal, and a playback signal. The RF amplifier 14 supplies the focusing error signal and the tracking error signal to the servo controller 15, and supplies the playback signal to the signal processor 16.

The servo controller 15 controls a focusing servo operation and a tracking servo operation. Specifically, based on the focusing error signal and the tracking error signal from the RF amplifier 14, the servo controller 15 generates and supplies a focusing servo signal and a tracking servo signal to an actuator (not shown) in the pickup 13. The servo controller 15 generates the spindle-motor driving signal for driving the spindle motor 12, and controls a spindle servo operation for rotating the optical disk 11 at a predetermined rotational speed.

The servo controller 15 also performs sled control for changing a laser-beam-emitted position by moving the pickup 13 in the radial direction of the optical disk 11. A signal-reading position in which a signal is read from the optical disk 11 is set by a controller 20, and the position of the pickup 13 is controlled so that a signal can be read in the set signal-reading position.

The signal processor 16 generates a recording signal by modulating recording data inputted from a memory controller 17 and supplies the recording signal to the pickup 13. The signal processor 16 also generates playback data by demodulating the playback signal from the RF amplifier 14 and supplies the playback data to the memory controller 17.

The memory controller 17 stores recording data from a data converter 19, if needed, as described later, and reads and supplies the stored recording data to the signal processor 16. The memory controller 17 also stores the playback data from the signal processor 16 in a memory 18, if needed, and reads and supplies the stored playback data to the data converter 19.

The data converter 19 generates recording data by compressing, if needed, based on a method such as MPEG (Moving Picture Experts Group) or JPEG (Joint Photographic Experts Group), audio signal and video captured by a video camera (not shown) and a signal played back from a recording medium (not shown) which are supplied from a signal input/output device 31, and supplies the generated data to the memory controller 17.

The data converter 19 also decompresses the playback data supplied from the memory controller 17, converts the decompressed data into an output signal in a predetermined format, and supplies the output signal to the signal input/output device 31.

Based on operation signals, etc., from an operation unit 21, the controller 20 controls the servo controller 15, the signal processor 16, the memory controller 17, and the data converter 19 to execute a recording/playback process.

The operation unit 21 is operated, for example, by a user to supply the controller 20 with an operation signal corresponding to the operation.

In the disk recording/playback apparatus 10 having the above-described structure, when data recording is commanded by an operation on the operation unit 21 by the user, data from the signal input/output device 31 is supplied through the data converter 19, the memory controller 17, the signal processor 16, and the pickup 13, and is recorded onto the optical disk 11.

When data playback is commanded by an operation on the operation unit 21 by the user, data recorded on the optical disk 11 is read and played back by the pickup 13, the RF amplifier 14, the signal processor 16, the memory controller 17, and the data converter 19, and is supplied to the signal input/output device 31.

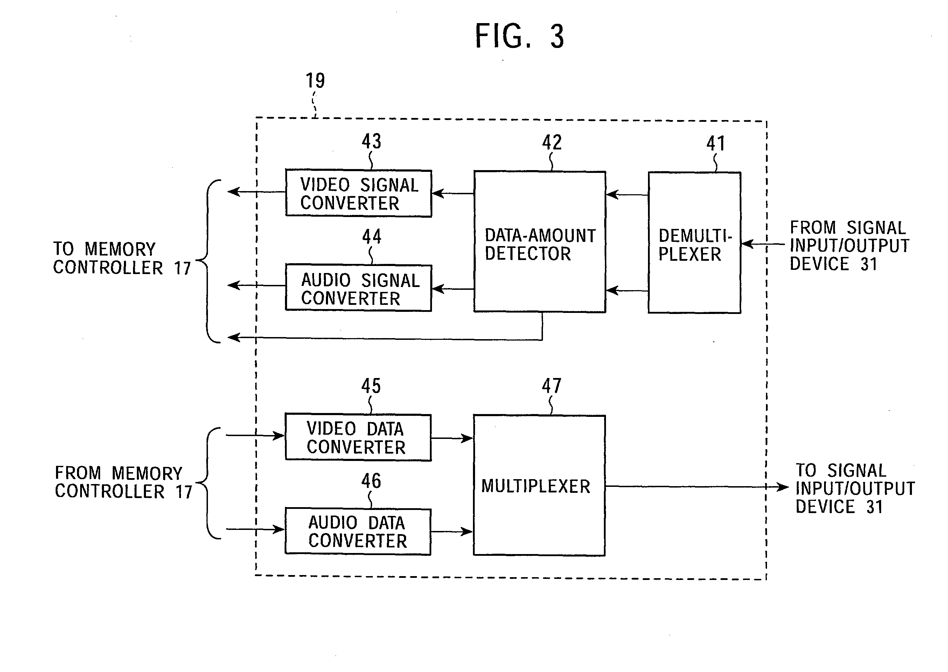

Next, Fig. 3 shows an example of the data converter 19 in Fig. 2.

In the mode of data recording onto the optical disk 11, signals are supplied from the signal input/output device 31 to a demultiplexer 41. From the supplied signals, a plurality of series of related data, that is, for example, a video signal (e.g., in base band) representing moving pictures and an audio signal (e.g., in base band) associated with the video signal, are separated and supplied to a data-amount detector 42 by the demultiplexer 41.

The data-amount detector 42 directly supplies the video signal and audio signal supplied from the demultiplexer 41 to a video signal converter 43 and an audio signal converter 44, respectively. The amounts of data of the video signal and the audio signal are detected and supplied to the memory controller 17 by the data-amount detector 42. In other words, the data-amount detector 42 detects the amounts of data concerning the supplied video signal and audio signal for a predetermined playback period, and supplies the detected amount of data to the memory controller 17.

The video signal converter 43 performs MPEG encoding on the video signal supplied from the data-amount detector 42, treating all frames as intra-pictures (I-pictures). The video signal converter 43 supplies the thus obtained series of pieces of video data to the memory controller 17. Also, for example, by using MPEG, the video signal converter 43 encodes the audio signal supplied from the data-amount detector 42, and supplies the thus obtained series of pieces of audio data to the memory controller 17.

The video data and audio data supplied to the memory controller 17 are supplied and recorded on the optical disk 11, as described above.

In the mode of playing back data from the optical disk 11, video data or audio data is read from the optical disk 11, as described above. The video data is supplied from the memory controller 17 to a video data converter 45, and the audio data is supplied from the memory controller 17 to an audio data converter 46.

The video data converter 45 performs, for example, MPEG decoding on the series of pieces of video data supplied from the memory controller 17, and supplies the thus obtained video signal to the a multiplexer 47. The audio data converter 46 performs, for example, MPEG decoding on the series of audio data supplied from the memory controller 17, and supplies the thus obtained audio signal to the multiplexer 47.

The multiplexer 47 supplies the signal input/output device 31 with the video signal supplied from the video data converter 45 and the audio signal supplied from the audio data converter 46. When only one of video data and audio data is read from the optical disk 11, whereby the video signal or the audio signal is supplied from the video data converter 45 or the audio data converter 46 to the multiplexer 47, it supplies either signal to the signal input/output device 31. When both video data and audio data are read from the optical disk 11, whereby the video signal and the audio signal are supplied from the video data converter 45 and the audio data converter 46 to the multiplexer 47, it multiplexes both signals to generate a multiplexed signal, and supplies the multiplexed signal to the signal input/output device 31. The multiplexer 47 can independently output the video signal and the audio signal in parallel.

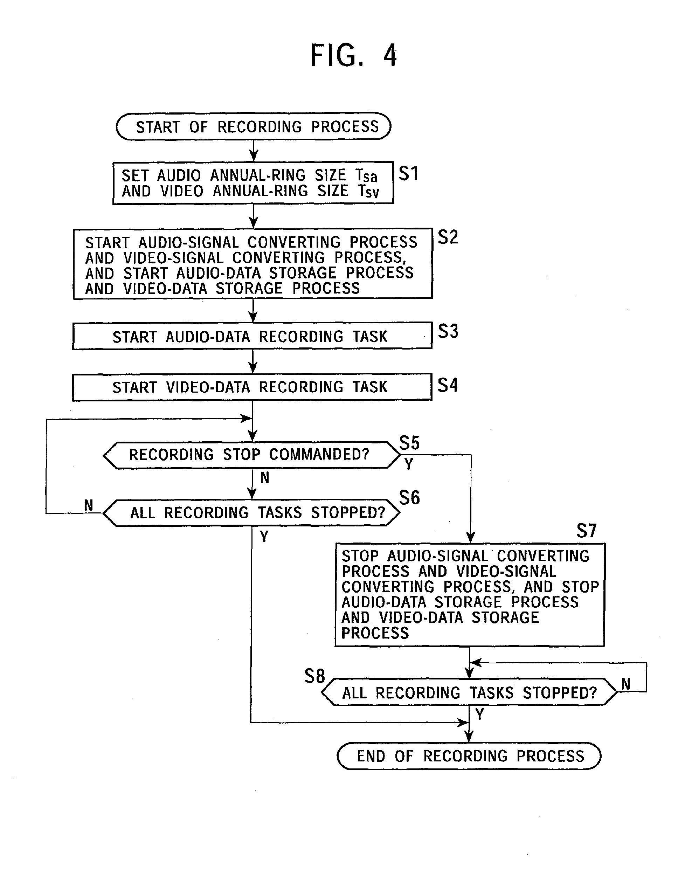

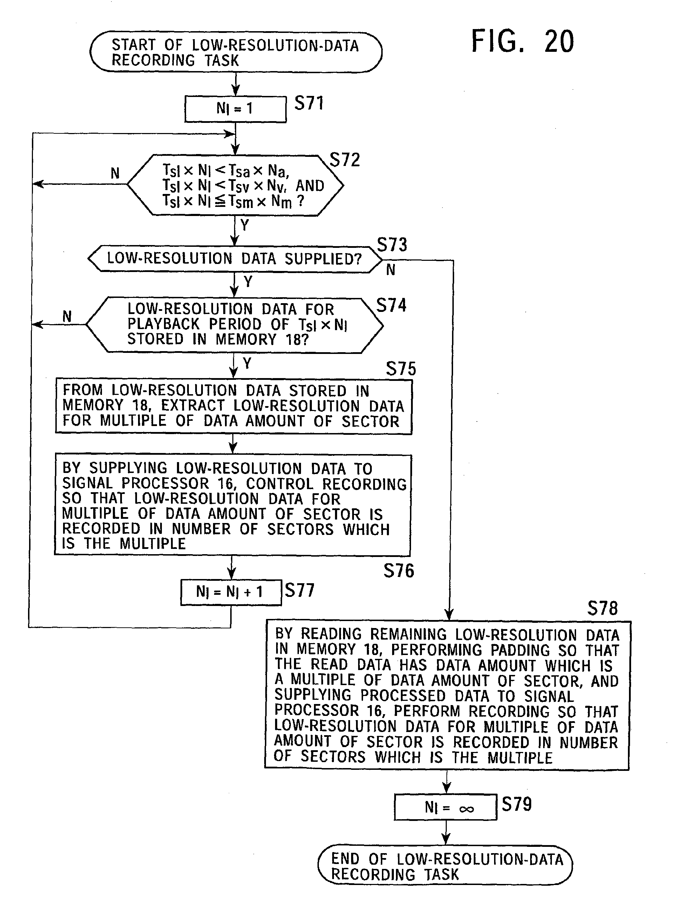

Next, a process of the controller 20 in Fig. 20 for recording audio data A and video data V on the optical disk 11 is described below with reference to the flowchart in Fig. 4.

When an operation on the operation unit 21 causes the operation unit 21 to supply the controller 20 with an operation signal for commanding the recording process to start, the controller 20 starts the recording process.

In step S1, at first, the controller 20 sets audio annual-ring size Tₛₐ and video annual-ring size Tₛᵥ.

Audio annual-ring size Tₛₐ is a variable for determining the amount of audio data A to be recorded on the optical disk 11 in a collective form, and is represented, for example, by an audio-signal playback period. Video annual-ring size Tₛᵥ is also a variable for determining the amount of video data V to be recorded on the optical disk 11 in a collective form, and is represented, for example, by a video playback period.

That audio annual-ring size Tₛₐ and video annual-ring size Tₛᵥ are, so to speak, indirectly represented by playback periods without being represented by amounts of data, such as the number of bits and the number of bytes, is based on the following reason.

In the recording process in Fig. 4, as described later, on the optical disk 11, audio annual-ring data as a set of audio data items for the amount of data based on audio annual-ring size Tₛₐ extracted from the series of pieces of audio data A, and video annual-ring data as a set of video data items for the amount of data based on video annual-ring size Tₛᵥ extracted from the series of pieces of video data V are periodically recorded in a predetermined pattern.

When the audio annual-ring data and the video annual-ring data are periodically recorded in a predetermined pattern on the optical disk 11, and audio and video are played back, the playback cannot be performed unless a video signal and an audio signal associated with the video signal are supplied. Accordingly, from a playback viewpoint, audio annual-ring data at a playback time and video annual-ring data at the playback time must be recorded in close positions on the optical disk 11, that is, for example, in adjacent positions.

When the amounts of audio data A and video data V for the same playback period are compared with each other, in general, the amounts of both greatly differ from each other. In other words, the amount of audio data A in a playback period is greatly smaller than that of video data V in the playback time. In addition, there may be a case in which the data rates of audio data A and video data V are not fixed but variable.

Accordingly, by using amounts of data to represent audio annual-ring size Tₛₐ and video annual-ring size Tₛᵥ, and respectively extracting, from data series of audio data A and video data V, in sequential order, audio annual-ring data and video annual-ring data in the amount of data, that is, audio annual-ring data and video annual-ring data of identical amounts, for video annual-ring data at each playback time, audio annual-ring data at a playback time positioned after gradual elapse of time from the playback time can be obtained. As a result, it is difficult to dispose, in adjacent positions on the optical disk 11, audio data and video data which must be played back in the same playback time.

Alternatively, by using a playback time to represent audio annual-ring size Tₛₐ and video annual-ring size Tₛᵥ, and respectively extracting, from data series of audio data A and video data V, in sequential order, audio annual-ring data and video annual-ring data for the playback period, a set of audio annual-ring data and video annual-ring data at similar playback times can be obtained. As a result, audio data and video data which must be played back in the same playback time can be disposed in adjacent positions.

Here, it is preferable that audio annual-ring size Tₛₐ be a value in which skipping by seeking of audio annual-ring data having the amount of data for a playback period represented by the audio annual-ring size Tₛₐ is faster than reading from the optical disk 11. Video annual-ring size Tₛᵥ is also similar to the audio annual-ring size Tₛₐ, and such video annual-ring size Tₛᵥ is, for example, approximately 1.5 to 2 seconds in experience of the present Inventors.

When audio annual-ring data and video annual-ring data at identical playback times are formed, audio annual-ring size Tₛₐ and video annual-ring size Tₛᵥ may have identical values. In this case, it is preferable from the above playback viewpoint that the audio annual-ring data and video annual-ring data at identical playback times be alternately disposed on the optical disk 11.

Audio annual-ring size Tₛₐ and video annual-ring size Tₛᵥ may have different values, and audio annual-ring size Tₛₐ can be, for example, double video annual-ring size Tₛᵥ since the data rate of the audio data is greatly less than that of the video data. In this case, for a piece of audio annual-ring data at a close playback time, the number of pieces of video annual-ring data at a playback time is two, and it is preferable, from the above playback viewpoint, that the one piece of audio annual-ring data and two pieces of video annual-ring data corresponding thereto be in close positions on the optical disk 11. Specifically, it is preferable that the one piece of audio annual-ring data and the two corresponding pieces of video annual-ring data be periodically disposed in predetermined order, for example, in the order of the audio annual-ring data and one of the two corresponding pieces of video annual-ring data, or in the order of one of the two corresponding pieces of video annual-ring data, the audio annual-ring data, and the other one of the two corresponding pieces of video annual-ring data.

Audio annual-ring size Tₛₐ and video annual-ring size Tₛᵥ which are set in step S1 may have predetermined fixed values or variable values. In order that the values of audio annual-ring size Tₛₐ and video annual-ring size Tₛᵥ may be variable, the variable values can be input by operating the operation unit 21.

It is obvious that step S1 is unnecessary when audio annual-ring size Tₛₐ and video annual-ring size Tₛᵥ have predetermined fixed values.

The recording process proceeds from step S1 to S2. In step S2, the controller 20 starts an audio-signal converting process and a video-signal converting process in which, by controlling the data converter 19, the audio signal and video signal, supplied from the signal input/output device 31 to the disk recording/playback apparatus 10, are encoded and compressed to generate data series of audio data A and video data V. The controller 20 also starts an audio-data storage process and a video-data storage process in which, by controlling the memory controller 17, the audio data A and video data V obtained in the data converter 19 are supplied and stored in the memory 18.

Proceeding to step S3, the controller 20 starts an audio-data recording task that is a control task for controlling audio data A on the optical disk 11, and proceeds to step S4. In step S4, the controller 20 starts a video-data recording task that is a control task for recording video data V on the RF block 1, and proceeds to step S5. Details of the audio-data recording task and the video-data recording task are described later. Steps S3 and S4 may be simultaneously performed or may be reversely performed.

In step S5, the controller 20 determines whether it has been supplied with an operation signal from the operation unit 21 for commanding data recording to stop. In step 35, if the controller 20 has determined that the operation signal has not been supplied yet, the controller 20 proceeds to step S6 and determines whether all recording tasks have stopped. In step S6, the controller 20 has determined that all the recording tasks have not stopped yet, the controller 20 returns to step S5 and similar processing is repeated thereafter.

In step S6, if all the recording tasks have already stopped, that is, when both the audio-data recording task started in step S3 and the video-data recording task started in step S4 have stopped, the recording process ends.

In step S5, if the controller 20 has determined that it has been supplied with the operation signal for commanding the data recording to stop, that is, for example, when the operation unit 21 is operated by the user to stop the data recording, the controller 20 proceeds to step S7. In step S7, the controller 20 stops the audio-signal converting process and video-signal converting process started in step S2 and the audio-data storage process and video-data storage process started in step S2, and proceeds to step S8.

In step S8, similarly to the case of step S6, the controller 20 determines whether all the recording tasks have stopped. In step S8, if the controller 20 has determined that all the recording tasks have not stopped, it returns to step S8 and waits for all the recording tasks to stop.

In step S8, if the controller 20 has determined that all the recording tasks have stopped, that is, when the audio-data recording task started in step S3 and the video-data recording task started in step 4 have stopped, the recording process ends.

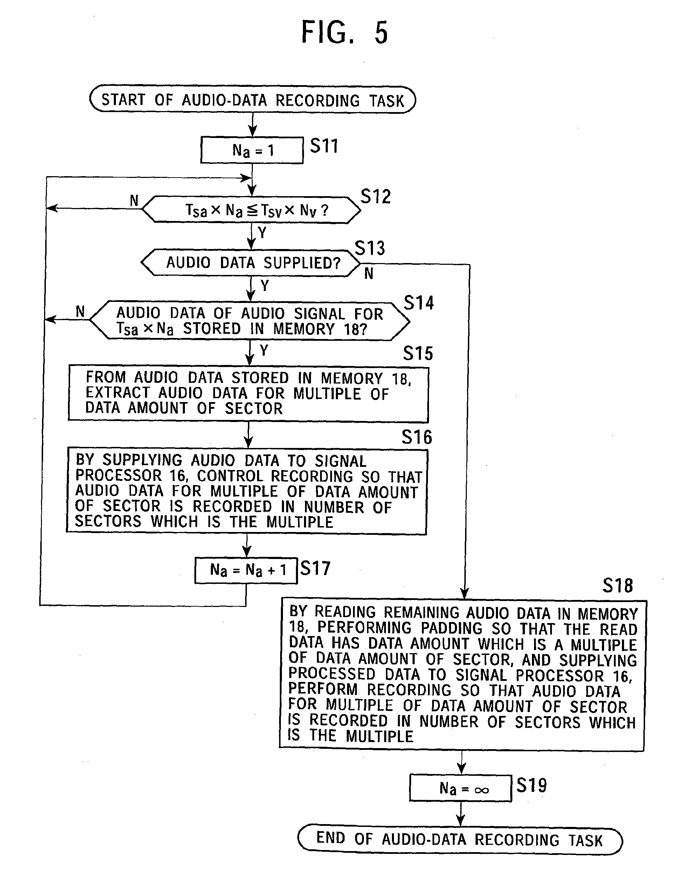

Next, the audio-data recording task started in step S3 in Fig. 4 is described below with reference to the flowchart in Fig. 5.

When the audio-data recording task starts, at first, in step S11, the controller 20 initializes variable Nₐ to, for example, 1. Variable Nₐ is incremented by 1 in step S17 (described later). The controller 20 proceeds to step S12.

In step S12, the controller 20 determines whether Tₛₐ × Nₐ is equal to or less than Tₛᵥ × Nᵥ.

Tₛₐ is an audio annual-ring size and represents a playback period of an audio signal. Variable Nₐ is incremented by 1 whenever audio data (audio annual-ring data) having the amount of data based on audio annual-ring size Tₛₐ is recorded on the optical disk 11, as described later. Similarly, Tₛᵥ is a video annual-ring size, and variable Nᵥ is incremented by 1 whenever video data (video annual-ring data) having the amount of data based on video annual-ring size Tₛᵥ is recorded on the optical disk 11, as described later. Accordingly, the expression Tₛₐ × Nₐ corresponds to the last playback time of audio annual-ring data to be recorded on the optical disk 11 when audio data is recorded in units of audio annual-ring size Tₛₐ, and the expression Tₛᵥ × Nᵥ corresponds to the last playback time of video annual-ring data to be recorded on the optical disk 11 when video data is recorded in units of video annual-ring size Tₛᵥ.

It is assumed that audio annual-ring data and video annual-ring data at identical playback times are periodically disposed in a predetermined pattern so as to be recorded in close positions on the optical disk 11. It is also assumed that audio annual-ring data and video annual-ring data at identical playback times are recorded so that the audio annual-ring data is firstly disposed and the video annual-ring data is subsequently disposed.

In the above case, when audio annual-ring data to be recorded is referred to as "audio annual-ring data of interest", the audio annual-ring data of interest is audio annual-ring data at the latest (closest to playback time Tₛₐ × Nₐ) playback time prior to playback time Tₛₐ × Nₐ. The audio annual-ring data of interest must be recorded just before video annual-ring data at the latest playback time prior to playback time Tₛₐ × Nₐ is recorded, that is, just after recording video annual-ring data at the second latest playback time prior to Tₛₐ × Nₐ.

The video annual-ring data to be recorded is video annual-ring data at the latest playback time prior to playback time Tₛᵥ × Nᵥ. Accordingly, recording of the video annual-ring data of interest must be performed with timing in which playback time Tₛₐ × Nₐ of audio annual-ring data is equal to or less than playback time Tₛᵥ × Nᵥ.

Accordingly, in step S12, as described above, the controller 20 determines whether playback time Tₛₐ × Nₐ of audio annual-ring data is equal to or less than playback time Tₛᵥ × Nᵥ. This determines whether the present time is used as timing in which recording of the audio annual-ring data of interest should be performed.

In step S12, if the controller 20 has determined that playback time Tₛₐ × Nₐ of audio annual-ring data is not equal to or less than playback time Tₛᵥ × Nᵥ, that is, when video annual-ring data at the latest playback time prior to playback time Tₛᵥ × Nᵥ has not been recorded yet, and the present time is not used as timing with which recording of the audio annual-ring data of interest should be performed, the controller 20 returns to step S12 and repeats similar processing.

In step S12, if the controller 20 has determined that playback time Tₛₐ × Nₐ of audio annual-ring data is equal to or less than playback time Tₛᵥ × Nᵥ, that is, when the present time is used as timing with which the recording of audio annual-ring data of interest should be performed, the controller 20 proceeds to step S13 and determines whether audio data A is supplied from the data converter 19 to the memory 18 through the memory controller 17. If the controller 20 has determined that audio data A is supplied, it proceeds to step S14.

In step S14, the controller 20 determines whether audio data A of the audio signal required for playback in the period Tₛₐ × Nₐ is accumulatively stored in the memory 18. If the controller 20 has determined that the audio data A has not been stored in the memory 18 yet, the controller 20 returns to step S12 and repeats the subsequent steps. In step S14, if the controller 20 has determined that the audio data A is stored in the memory 18, the controller 20 proceeds to step S15.

When the data-amount detector 42 in the data converter 19 detects the accumulative audio signal required for playback in period Tₛₐ × Nₐ, it notifies the memory controller 17 of the detection. Based on this notification, the memory controller 17 determines whether the audio data A required for playback in the period Tₛₐ × Nₐ is accumulatively stored in the memory 18. The memory controller 17 notifies the controller 20 of the result of determination. In other words, based on the result of determination from the memory controller 17, the controller 20 performs the determination in step S14. Although this embodiment stores, in the memory 18, audio data obtained by encoding and compressing the audio signal, the audio signal may be directly stored as audio data in the memory 18 without being encoded and compressed. In addition, uncompressed audio data can be recorded.

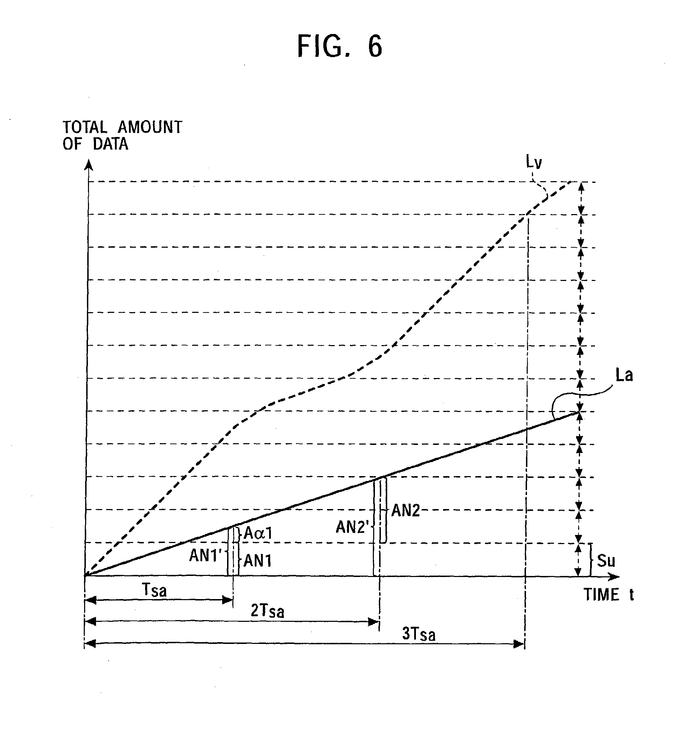

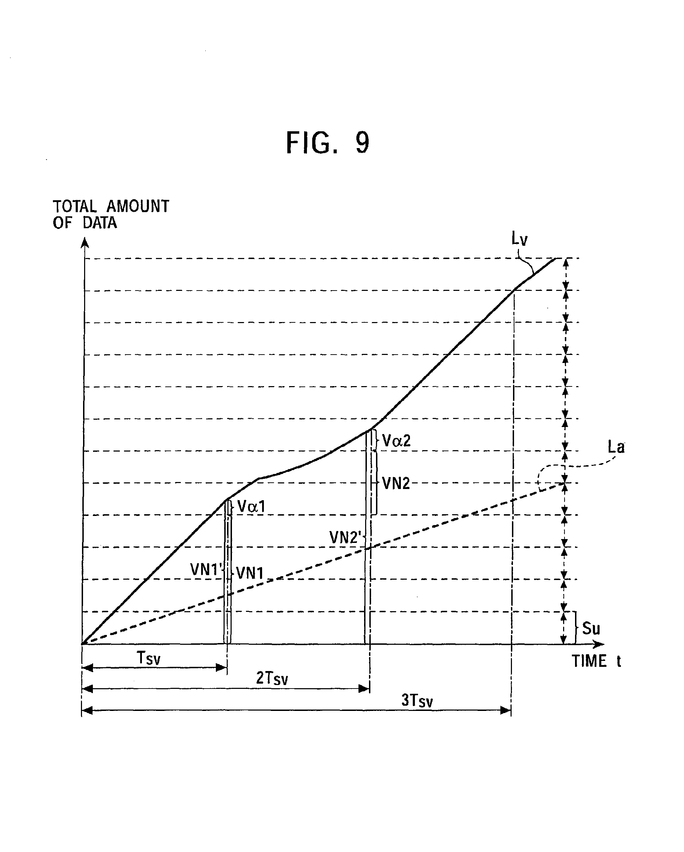

Fig. 6 shows a relationship between the accumulative amount (accumulative data amount) La of audio data A stored in the memory 18 and time (playback period). On the right side of Fig. 6, each set of small arrows (indicating the distance between horizontal dotted lines) indicating upper and lower directions indicates the amount Su of data in a sector. The dotted line Lv shown in Fig. 6 indicates the accumulative amount (accumulative data amount) Lv (indicated by the solid line in Fig. 9 described later) of video data V stored in the memory 18. In Fig. 6, the accumulative amount La of audio data A is indicated by a straight line, thus representing a fixed data rate of audio data A. Audio data A may have a variable data rate.

Referring to Fig. 6, for example, the required amount of audio data A for playback in the period Tₛₐ × Nₐ when Nₐ = 1 is AN1'. In step S14 when Nₐ = 1, when audio data A having accumulative data amount AN1' is stored in the memory 18, the controller 20 determines that audio data A for playback in the period Tₛₐ × Nₐ is stored in the memory 18, and proceeds to step S15.

In step S15, the controller 20 controls the memory controller 17 to extract, from audio data A stored in the memory 18, the maximum amount of audio data A readable from the memory 18 in a form in which audio data A is read in the temporal order of inputting pieces of audio data A. The maximum amount of audio data A readable from the memory 18 is the amount of data represented by an integral multiple of (n times) the amount Su of data in a physical recording/playback unit (physical unit area) formed on the optical disk 11, for example, one sector. After that, the controller 20 proceeds to step S16. Audio annual-ring data, read (from the memory 18) as the maximum amount of audio data A readable from the memory 18 which is the amount of data represented by an integral multiple of the amount of data in one sector, is the above-described latest audio annual-ring data prior to playback time Tₛₐ × Nₐ.

In Fig. 6, at time 1 × Tₛₐ, the memory 18 stores at least the amount AN1' of audio data A. The amount AN1' is greater than the amount of data in one sector but is less than the amount of data in two sectors. Thus, in step S15, from the memory 18, audio data A having the amount AN1, which is the amount Su of data in one sector, is extracted as audio annual-ring data of interest.

Audio data that has not been read in step S15, that is, at time 1 × Tₛₐ in Fig. 6, audio data A having the amount Aα1 of data less than the amount Su of data in one sector, remains unchanged in the memory 18.

Referring back to Fig. 5, in step S15, the controller 20 supplies, from the memory controller 17 to the signal processor 16, the audio annual-ring data of interest having an amount of data which is an integral multiple of the amount of data in one sector, whereby recording control is performed so that audio annual-ring data having an amount of data which is an integral multiple of the amount of data in one sector is recorded in the number of sectors represented by the multiple.

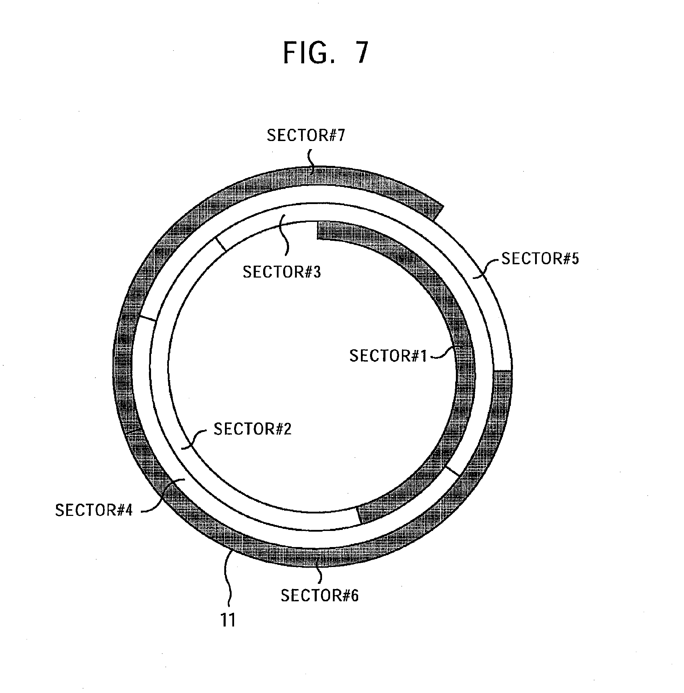

At time 1 × Tₛₐ, audio data A having the amount Su of data in one sector is supplied as audio annual-ring data of interest from the memory controller 17 to the signal processor 16. The audio annual-ring data of interest corresponding to the amount Su of data in one sector is supplied to the pickup 13, and is recorded in sector #1 of the sectors of the optical disk 11 so that the boundaries of audio annual-ring data can match the boundaries of sector #1, as shown in Fig. 7.

For brevity of description, it is assumed that the optical disk 11 has physically sequential free areas having sufficiently large size. Also, when it is assumed that reading/writing of data on the optical disk 11 is performed, for example, in the direction from inner to outer circumference, data items are consecutively written from the inner to outer circumference of the free area in the order of data items supplied from the memory controller 17 to the signal processor 16.

After control of recording the audio annual-ring data of interest is performed, as described above, in step S16, the controller 20 proceeds to step S17 and increments variable Nₐ by 1. The controller 20 returns to step S12 and executes the subsequent processing.

In step S13, if the controller 20 has determined that audio data A is supplied to the memory 18, that is, when the supply of audio data A from the data converter 19 to the memory controller 17 stops, the controller 20 proceeds to step S18. In step S18, the controller 20 controls the memory controller 17 to read all the remaining audio data A from the memory 18 and to add padding data to the read data so that its amount is the minimum amount of data which is an integral multiple of the amount of data in one sector. This forms the audio data A read from the memory 18 into audio annual-ring data having an amount of data which is an integral multiple of the amount of data in one sector. The controller 20 also controls the memory controller 17 to supply the audio annual-ring data to the signal processor 16, thereby controlling recording so that the audio annual-ring data having an amount of data which is an integral multiple of the amount of data in one sector can be recorded in the corresponding number of sectors.

After that, proceeding to step S19, the controller 20 sets a value (extremely large value) corresponding to infinity, as variable Nₐ, and stops the audio-data recording task.

Although the above case uses sectors as the physical unit areas of the optical disk 11, for example, error-correcting-code (ECC) blocks in which ECC processing is performed on unit data may be used as the physical unit areas of the optical disk 11. In addition, for example, a fixed number of sectors and a fixed number of ECC blocks may be used as the physical unit areas of the optical disk 11.

The ECC processing is performed, for example, in the signal processor 16 in units of ECC blocks. A sector can be constituted by one or more ECC blocks. Alternatively, at least one ECC block can be used.

In the following description, one sector is used as a physical unit area. In the case of assuming that one sector forms one ECC block, if a sector or an ECC block is used as a physical unit area, the result of recording data on the optical disk 11 in either case is identical.

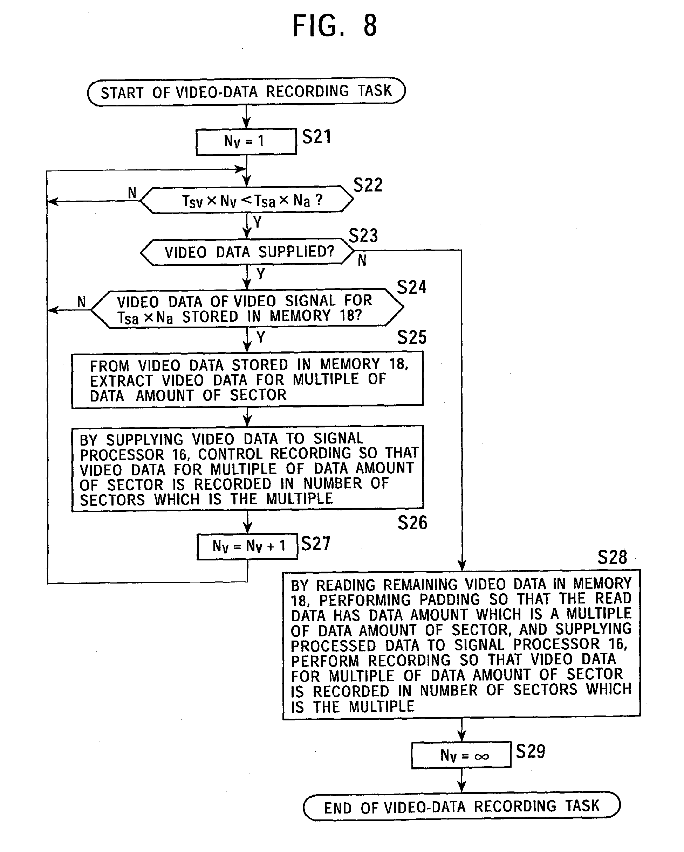

Next, the video-data recording task started in step S4 in Fig. 4 is described below with reference to the flowchart in Fig. 8.

When the video-data recording task starts, at first, in step S21, the controller 20 initializes variable Nᵥ to, for example, 1. Variable Nᵥ is incremented by 1 in step S27 (described later). The controller 20 proceeds to step S22.

In step S22, the controller 20 determines whether Tₛᵥ × Nᵥ is less than Tₛₐ × Nₐ.

As described above concerning the audio-data recording task, Tₛₐ × Nₐ corresponds to the latest playback time of audio annual-ring data to be recorded on the optical disk 11 in the case of recording audio data in units of each audio annual-ring size Tₛₐ, and Tₛᵥ × Nᵥ corresponds to the latest playback time of video annual-ring data to be recorded on the optical disk 11 in the case of recording video data in units of each video annual-ring size Tₛᵥ.

Here, it is assumed that audio annual-ring data and video annual-ring data at similar playback times are periodically disposed in a predetermined pattern so as to be recorded in close positions on the optical disk 11, and it is assumed that audio annual-ring data and video annual-ring data at similar playback times are recorded so that the audio annual-ring data is firstly disposed and the video annual-ring data is subsequently disposed. When video annual-ring data to be recorded is referred to as "video annual-ring data of interest", the video annual-ring data of interest is video annual-ring data in the latest (closest to playback time Tₛᵥ × Nᵥ) playback time prior to playback time Tₛᵥ × Nᵥ. The video annual-ring data of interest must be recorded just after recording the video annual-ring data in the latest playback time prior to playback time Tₛₐ × Nₐ. Therefore, the video annual-ring data of interest must be recorded with timing in which the playback time Tₛᵥ × Nᵥ of the video annual-ring data is less than the playback time Tₛₐ × Nₐ of the video annual-ring data.

Accordingly, in step S22, as described above, the controller 20 determines whether the playback time Tₛᵥ × Nᵥ of the video annual-ring data is less than the playback time Tₛₐ × Nₐ of the video annual-ring data. This determines whether the present time is used as timing with which recording of the video annual-ring data of interest should be performed.

In step S22, if the controller 20 has determined that the playback time Tₛᵥ × Nᵥ of the video annual-ring data is not less than the playback time Tₛₐ × Nₐ of the video annual-ring data, that is, when the present time is not used as timing with which recording of the video annual-ring data of interest should be performed, the controller 20 returns to step S22 and repeats subsequent processing.

In step S22, if the controller 20 has determined that the playback time Tₛᵥ × Nᵥ of the video annual-ring data is less than the playback time Tₛₐ × Nₐ of the video annual-ring data, that is, when the present time is used as timing with which recording of the video annual-ring data of interest should be performed, the controller 20 proceeds to step S23 and determines whether video data V is supplied from the data converter 19 to the memory 18 through the memory controller 17. If the controller 20 has determined that video data V is supplied, it proceeds to step S24.

In step S24, the controller 20 determines whether the memory 18 accumulatively stores the video data V required for playback in the period Tₛᵥ × Nᵥ. If the controller 20 has determined that the memory 18 does not store the required video data V yet, it returns to step S22 and repeats the subsequent processing. In step S24, if the controller 20 has determined that the memory 18 stores the required video data V, the controller 20 proceeds to step S25.

When the data-amount detector 42 in the data converter 19 detects the accumulative video signal required for playback in the period Tₛᵥ × Nᵥ, it notifies the memory controller 17 of the detection. Based on this notification, the memory controller 17 determines whether the video data V required for playback in the period Tₛᵥ × Nᵥ is accumulatively stored in the memory 18. The memory controller 17 notifies the controller 20 of the result of determination. In other words, based on the result of determination from the memory controller 17, the controller 20 performs the determination in step S24. Although this embodiment stores, in the memory 18, video data obtained by encoding and compressing the video signal, the video signal may be directly stored as video data in the memory 18 without being encoded and compressed. In addition, uncompressed video data can be recorded.

Fig. 9 shows a relationship between the accumulative amount (accumulative data amount) La of video data V stored in the memory 18 and time (playback period). Similarly to the case of Fig. 6, on the right side of Fig. 9, each set of small arrows (indicating the distance between horizontal dotted lines) indicating upper and lower directions indicates the amount Su of data in a sector. In Fig. 9, the dotted line La indicates the amount La of audio data A stored in the memory 18, which is indicated by the solid line in Fig. 6.

In Fig. 9, for example, the required amount of video data V for playback in the period Tₛᵥ × Nᵥ (= 1) when Nᵥ = 1 is VN1'. Accordingly, in step S24 when Nᵥ = 1, when video data V having accumulative amount VN1' is stored in the memory 18, the controller 20 determines that video data V for the playback period Tₛᵥ × Nᵥ is stored in the memory 18, and proceeds to step S25.

In step S25, the controller 20 controls the memory controller 17 to extract, from video data V stored in the memory 18, the maximum amount of video data V readable from the memory 18 in a form in which video data V is read in the temporal order of inputting pieces of video data V. The maximum amount of video data V readable from the memory 18 is the amount of data represented by an integral multiple of (n times) the amount Su of data in a physical recording/playback unit (physical unit area) formed on the optical disk 11, for example, one sector. After that, the controller 20 proceeds to step S26. Video annual-ring data, read (from the memory 18) as the maximum amount of video data V readable from the memory 18 which is the amount of data represented by an integral multiple of the amount of data in one sector, is the above-described latest video annual-ring data prior to playback time Tₛᵥ × Nᵥ.

In Fig. 9, at time 1 × Tₛᵥ, the memory 18 stores at least the amount VN1' of video data V. The amount VN1' of video data V is greater than the amount of data in four sectors but is less than the amount of data in five sectors. Thus, in step S25, video data V having the amount VN1 which is the amount of data in four sectors is extracted as video annual-ring data of interest.

Video data unread in step S25, that is, the amount Vα1 of video data V that does not satisfy the amount Su of one sector at time 1 × Tₛᵥ in Fig. 9, remains unchanged in the memory 18.

Referring back to Fig. 8, in step S26, the controller 20 controls the memory controller 17 to supply the signal processor 16 with the amount of video annual-ring data which is an integral multiple of the amount of data in one sector. This controls recording so that the amount of video annual-ring data which is an integral multiple of the amount of data in one sector can be recorded in the number of sectors represented by the multiple.

Here, at 1 × Tₛᵥ in Fig. 9, the video data V having the amount Su of data in four sectors is supplied as video annual-ring data of interest from the memory controller 17 to the signal processor 16. The video annual-ring data of interest having the amount Su of data in four sectors is supplied to the pickup 13 and is recorded in four sectors #2, #3, #4, and #5 on the optical disk 11 so that the boundaries of the video annual-ring data match the boundaries (the head boundary of sector #2 and the end boundary of sector #5) of the areas of sectors #2, #3, #4, and #5.

In other words, for brevity of description, in the case of assuming that audio annual-ring size Tₛₐ and video annual-ring size Tₛᵥ are equal to each other, after the audio-data recording task in Fig. 5 and the video-data recording task in Fig. 8 start, when Nₐ = Nᵥ = 1, the latest audio annual-ring data prior to playback time Tₛₐ × Nₐ is recorded in sector #1, as shown in Fig. 7. The recording of the audio annual-ring data in sector #1 increments variable Nₐ by 1 in step S17 in the audio-data recording task in Fig. 5, so that Nₐ = 2. At this time, variable Nᵥ still remains as 1. Accordingly, playback time Tₛₐ × Nᵥ is less than playback time Tₛₐ × Nₐ. As a result, in the video-data recording task in Fig. 8, in step S26, the latest video annual-ring data prior to playback time Tₛₐ × Nᵥ is recorded in sectors #2 to #5.

As described above, in this case, on the optical disk 11, data is consecutively recorded from the inner to outer circumference of the free area in the order of the data supplied from the memory controller 17 to the signal processor 16. Thus, the video annual-ring data in four sectors, which is the latest video annual-ring data prior to playback time Tₛₐ × Nᵥ, starts from sector #2 just after sector #1 in which the audio annual-ring data is. recorded just before recording the video annual-ring data, and is recorded in sectors #2 to #5, as shown in Fig. 7.

Therefore, the audio annual-ring data and video annual-ring data obtained when Nₐ = Nᵥ = 1, that is, the latest video annual-ring data prior to playback time Tₛₐ × Nₐ and the latest video annual-ring data prior to playback time Tₛᵥ × Nᵥ equal to Tₛₐ × Nₐ, in other words, audio annual-ring data and video annual-ring data at close playback times are recorded in adjacent positions on the optical disk 11.

After recording of the video annual-ring data of interest is controlled in the above-described step S26, the controller 20 proceeds to step S27 and increments variable Nᵥ by 1. After that, the controller 20 returns to step S22 and repeats the subsequent processing.

In step S23, if the controller 20 has determined that video data V is not supplied to the memory 18, that is, when the supply of video data V from the data converter 19 to the memory controller 17 stops, the controller 20 proceeds to step S28. In step S28, the controller 20 controls the memory controller 17 to read all the video data V remaining in the memory 18 and to add padding data to video data V so that the amount of video data V is the least multiple of the amount of data in one sector. This forms the video data V read from the memory 18 to video annual-ring data having an amount which is an integral multiple of the amount of data in one sector. The controller 20 controls the memory controller 17 to supply the video annual-ring data to the signal processor 16, thereby controlling recording so that the video annual-ring data having the amount which is an integral multiple of the amount of data in one sector is recorded in the number of sectors represented by the multiple.

After that, the controller 20 proceeds to step S29, and sets a value corresponding to infinity as variable Nᵥ and stops the video-data recording task.

Next, the audio-data recording task in Fig. 5 and the video-data recording task in Fig. 8 are described below again, using the case of Nₐ = Nᵥ = 2. Also, in the following description, for brevity of description, it is assumed that audio annual-ring size Tₛₐ and video annual-ring data Tₛᵥ are at the same time.

Since audio annual-ring size Tₛₐ and video annual-ring data Tₛᵥ are equal to each other in this case, when Nₐ = Nᵥ = 2, the controller 20 determines in step S12 in Fig. 5 that playback time Tₛₐ × Nₐ is equal to or less than playback time Tₛᵥ × Nᵥ, it proceeds to step S13. When Nₐ = Nᵥ = 2, playback time Tₛₐ × Nₐ and Tₛₐ × Nᵥ are equal to each other. Thus, playback time Tₛₐ × Nₐ is equal to or less than playback time Tₛₐ × Nᵥ but is not less than playback time Tₛₐ × Nₐ. Accordingly, when Nₐ = Nᵥ = 2, in step S22 in Fig. 8, the controller 20 determines that playback time Tₛᵥ × Nᵥ is not less than playback time Tₛₐ × Nₐ. The controller 20 repeatedly returns to step S22.

When the controller 20 determines in step S12 in Fig. 5 that playback time Tₛₐ × Nₐ is equal to or less than Tₛᵥ × Nᵥ, and proceeds to step S13, if the supply of audio data A to the memory 18 continues to be performed, the controller 20 proceeds from step S13 to step S14, and determines whether the memory 18 accumulatively stores the audio data A required for playback in period Tₛₐ × Nₐ (= 2). If the controller 20 has determined affirmatively, the controller 20 proceeds to step S15.

In the case shown in Fig. 6, the amount of the audio data A required for playback in period Tₛₐ × 2. Thus, when the memory 18 accumulatively stores the amount AN2' of audio data A, the controller 20 proceeds from step S14 to S15.

In step S15, the memory 18 stores at least the unread audio data A (the amount Aα1 of audio data A in the case in Fig. 6) in step S15 when Nₐ = 1, and audio data A supplied to the memory 18 after step S15 when Nₐ = 1 to the present. Thus, from the stored audio data A, audio data A having an amount of data which is the maximum multiple of the amount of data in one sector is extracted as audio annual-ring data of interest.

In other words, for example, in the case shown in Fig. 6, at time Tₛₐ × 2, the memory 18 stores audio data A having an amount of data which is not less than the amount of data in two sectors and which is less than the amount of data in three sectors. Accordingly, in step S15, from the stored audio data A, audio data A having the amount AN2 (= 2 × Su) of data in two sectors which is the maximum multiple of the amount of data in one sector is extracted as audio annual-ring data of interest. In Fig. 6, at time 2 × Tₛₐ, the amount of the audio data A stored in the memory 18 is equal to the amount AN2 of data in two sectors. Accordingly, after extracting the amount AN2 of data in two sectors, no audio data A remains in the memory 18.

In step S16, the audio annual-ring data of interest having the amount AN2 of data in two sectors is supplied from the memory controller 17 to the signal processor 16. The audio annual-ring data of interest having the amount AN2 of data in two sectors is supplied to the pickup 13 and is recorded from a sector adjacently subsequent to a sector in which data is recorded just before the recording of the audio annual-ring data of interest.

In other words, in the above case, as described with reference to Fig. 7, just before the audio annual-ring data of interest having the amount AN2 of data in two sectors, the video annual-ring data is recorded in sectors #2 to #5. Accordingly, the audio annual-ring data of interest having the amount AN2 of data in two sectors is recorded from sector #6 just after sector #5. Specifically, as shown in Fig. 7, as shown in Fig. 7, the audio annual-ring data of interest having the amount AN2 of data in two sectors is recorded in two sectors #6 and #7 so that the boundaries of the audio annual-ring data match the boundaries of sectors #6 and #7 on the optical disk 11.

After the audio annual-ring data of interest is recorded, in the audio-data recording task in Fig. 5, in step S17, variable Nₐ is incremented by 1, so that variable Nₐ whose value is 2 is changed to 3.

Therefore, Nₐ = 3 and Nᵥ = 2. In this case, playback time T_{sy} × Nᵥ is less than playback time Tₛₐ × Nₐ. Thus, in the video-data recording task in Fig. 8, in step S22, the controller 20 determines that playback time Tₛᵥ × Nᵥ is less than playback time Tₛₐ × Nₐ, it proceeds to step S23.

In step S22 in Fig. 8, in a case in which the controller 20 has determined that playback time Tₛᵥ × Nᵥ is less than playback time Tₛₐ × Nₐ, and proceeds to step S23, when the supply of video data V to the memory 18 is continuously performed, the controller 20 proceeds from step S23 to S24, and determines whether the memory 18 accumulatively store the video data V required for playback in period Tₛᵥ × Nᵥ (= 2). If the controller 20 has determined affirmatively, it proceeds to step S25.

In the case shown in Fig. 9, the amount of video data V required for playback in period Tₛᵥ × 2 is VN2'. Accordingly, when the memory 18 accumulatively stores the amount VN2' of video data V, the controller 20 proceeds from step S24 to S25.

At this time, the memory 18 stores at least unread video data V (the amount Vα1 of video data V in the case shown in Fig. 9) in step S25 when Nᵥ = 1, and the video data V supplied after step S25 when Nᵥ = 1 to the present. From the stored video data V, video data V having an amount of data which is the maximum multiple of the amount of data in one sector is extracted as video annual-ring data of interest.

In other words, for example, in the case in Fig. 9, at time Tₛᵥ × 2, the memory 18 stores video data V having an amount which is not less than the amount of data in two sectors and is less than the amount of data in three sectors. Accordingly, in step S25, from the video data V stored in the memory 18, video data V having the amount VN2 (= 2 × Su) of data in two sectors which is the maximum multiple of the amount of data in one sector is extracted as video annual-ring data of interest. In Fig. 9, at time 2 × Tₛᵥ, the amount of the video data V stored in the memory 18 is greater than the amount VN2 of data in two sectors. Accordingly, after the amount VN2 of data in two sectors is extracted, video data V having the amount Vα2 of data remains in the memory 18.

The video annual-ring data of interest having the amount VN2 of data in two sectors is supplied from the memory controller 17 to the signal processor 16 in step S26. The video annual-ring data of interest having the amount VN2 of data in two sectors is supplied to the pickup 13, and is recorded in a sector adjacently subsequent to a sector in which data is recorded just before the recording of the video annual-ring data of interest.

In the above case, as described with reference to Fig. 7, just before the video annual-ring data of interest having the amount AN2 of data in two sectors, the video annual-ring data is recorded in sectors #6 and #7. Accordingly, the video annual-ring data of interest having the amount AN2 of data in two sectors is recorded from a sector adjacently subsequent to sector #7.

After the video annual-ring data of interest is recorded, in the video-data recording task in Fig. 8, variable Nᵥ is incremented by 1 in step S27, so that variable Nᵥ whose value is 2 is changed to 3, which is identical to variable Nₐ.

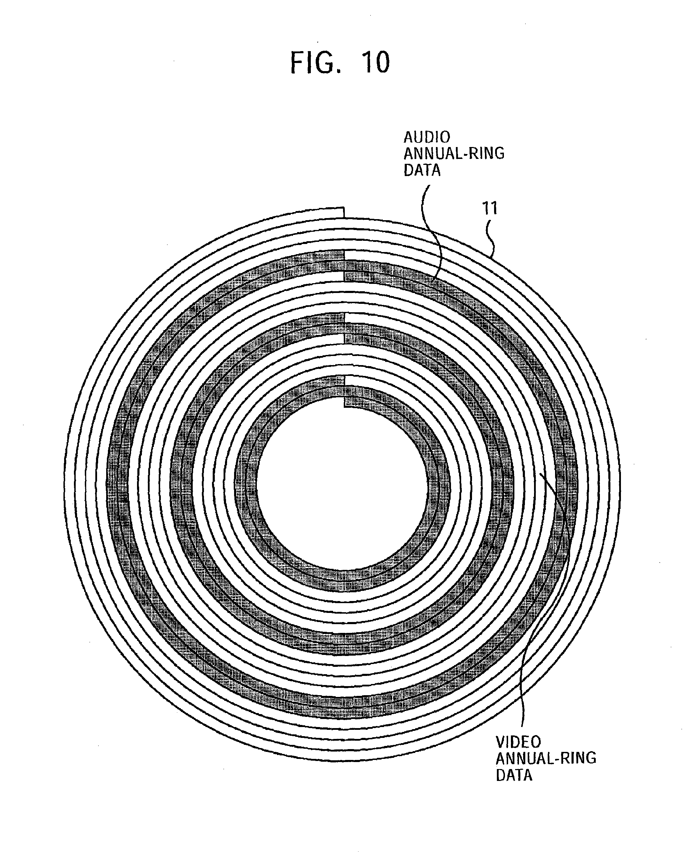

After that, the audio-data recording task and the video-data recording task are similarly performed, whereby audio data A and video data V are recorded on the optical disk 11. Accordingly, when audio annual-ring size Tₛₐ and video annual-ring size Tₛᵥ represent the same time, audio annual-ring data which is a set of pieces of audio data A and video annual-ring data which is a set of pieces of video data V at similar playback times are sequentially recorded so as to be disposed in adjacent positions on the optical disk 11, as shown in Fig. 10. In other words, in this case, audio annual-ring data and video annual-ring data at similar times are alternately recorded on the optical disk 11.

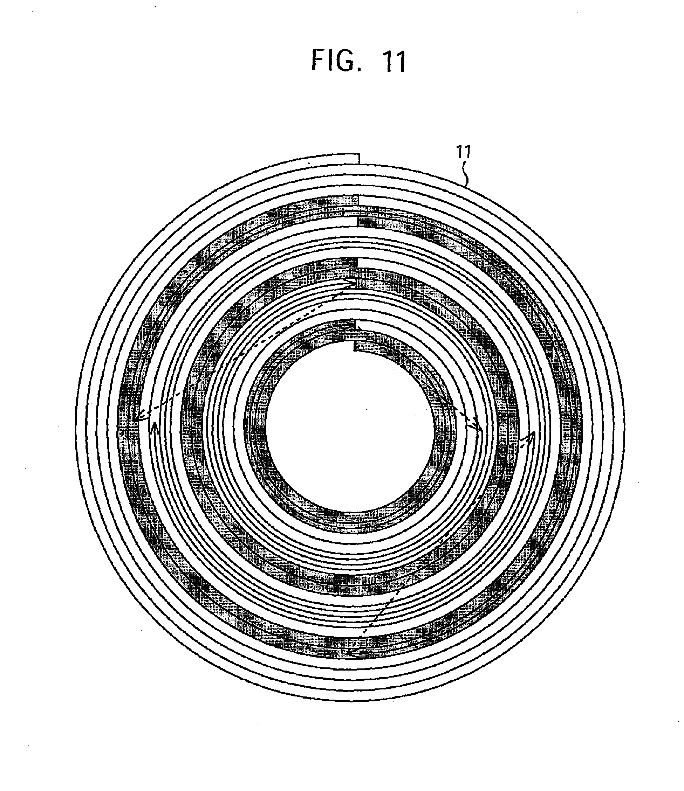

Fig. 10 is a schematic illustration of tracks of the optical disk 11 on which audio data and video data are recorded, as described above. In Fig. 10 (similarly in Fig. 11 described later), the recorded portions of the audio data are indicated by shadings, and the recorded portions of the video data are indicated by blanks.

As can be understood from Fig. 10, the video data and the audio data are recorded on the optical disk 11 in such a form that annual rings are formed. Accordingly, a set of pieces of audio data and a set of pieces of video data which are recorded on the optical disk 11 are referred to as audio "annual-ring" data and video "annual-ring" data, respectively. This similarly applies to low-resolution data and meta annual-ring data, which are described later. In the following description, a set of pieces of data in a data series which is recorded on the optical disk 11 in such a form that annual rings are formed is referred to as "annual-ring data".

Each width (on how many tracks a piece of audio annual-ring data or video annual-ring data is recorded) of annual rings formed on the optical disk 11 is determined by audio annual-ring size Tₛₐ and video annual-ring size Tₛᵥ. The audio annual-ring size Tₛₐ and the video annual-ring size Tₛᵥ can be changed in accordance with a radius position on the optical disk 11 in which the audio annual-ring data and the video annual-ring data are recorded. A track on which a piece of audio annual-ring data and a piece of video annual-ring data may not reach a circumference, depending on audio annual-ring size Tₛₐ and video annual-ring size Tₛᵥ.

As described above, audio annual-ring data and video annual-ring data at similar times are recorded in close positions on the optical disk 11. Thus, from the optical disk 11, audio data and video data at the same playback time can be rapidly read and played back.

In addition, audio data and video data are treated as annual-ring data for the amount of data in a plurality of sectors, and in the sectors, both are recorded so that the boundaries of the annual-ring data match the boundaries of the sectors. Thus, only either the audio data or the video data can be read, thus enabling rapid of editing of only either the audio data or the video data.

In the above case, video data V and video data V which have an amount of data equal to or less than the amount of data in one sector are alternately recorded on the optical disk 11 in a consecutive form in which both are collectively treated in one or more sectors. Thus, the number of times seeking is performed which is indicated by each dotted arrow in Fig. 11 can be reduced compared with a case in which small video data V and video data V are disposed in mixed form in a sector as conventional. Reducing the number of times seeking is performed is that a substantial rate of reading data from the optical disk 11 can be increased by the reduction. As a result, in the playback mode, data read from the optical disk 11 can be sufficiently stored in the memory 18. This can prevent playback from being interrupted due to underflow of the memory 18 caused by the occurrence of seeking. In addition, when data reading from the optical disk 11 fails, an interruption of playback can be prevented, even if reading of data having failed to be read is retried, because sufficient data is stored in the memory 18.
Moreover, power consumption can be saved by a reduction in the number of times seeking is performed.

A case in which the disk recording/playback apparatus 10 records data on the optical disk 11 has been described in so far. However, the present invention can be widely applied also to a type of the optical disk 11 on which at least some data items or some data series are recorded by cutting, as described in Fig. 7, 10, 11, 12, or 27, that is, an optical disk including a ROM area containing some data items or some data series.

By providing the above optical disk, a playback apparatus can have an advantage in that the number of times seeking is performed is reduced, etc. In particular, also in the case of playback by using nondestructive editing based on an editing list, a substantial data-reading rate increases, thus enabling video data and audio data to be played back without being interrupted. In addition, the above optical disk is suitable for playing back only video data or audio data.

Although a case in which audio data A or video data V in encoded and compressed form is stored in the memory 18 has been described, audio data A or video data V can be stored in the memory 18 without being encoded and compressed.

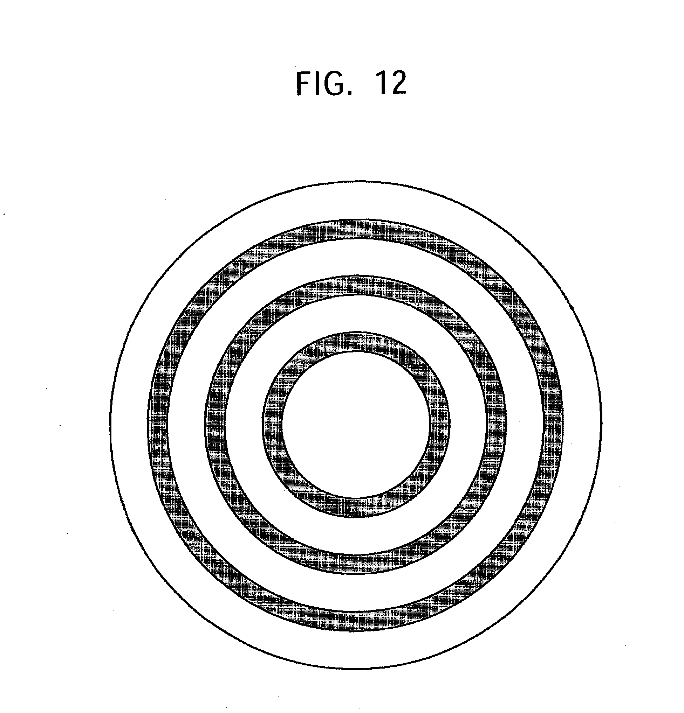

Although a case in which video data V and audio data A are disposed on spiral tracks has been described, as shown in Fig. 12, both can be alternately disposed on concentric tracks. In this case, the tracks are arranged so that each inner circumferential track connects to an adjacent outer circumferential track. However, each outer circumferential track may connect to an adjacent inner circumferential track.

For example, when it is assumed that audio annual-ring size Tₛₐ and video annual-ring size Tₛᵥ are at the same playback time, according to the video-data recording task in the flowchart in Fig. 8, the transfer of the video annual-ring to the signal processor 16, which is performed in step S26 when Nᵥ = 1, is performed when variable Nₐ is incremented from 1 to 2 in step S17 after the transfer of the video annual-ring data to the signal processor 16 is performed when Nₐ = 1.

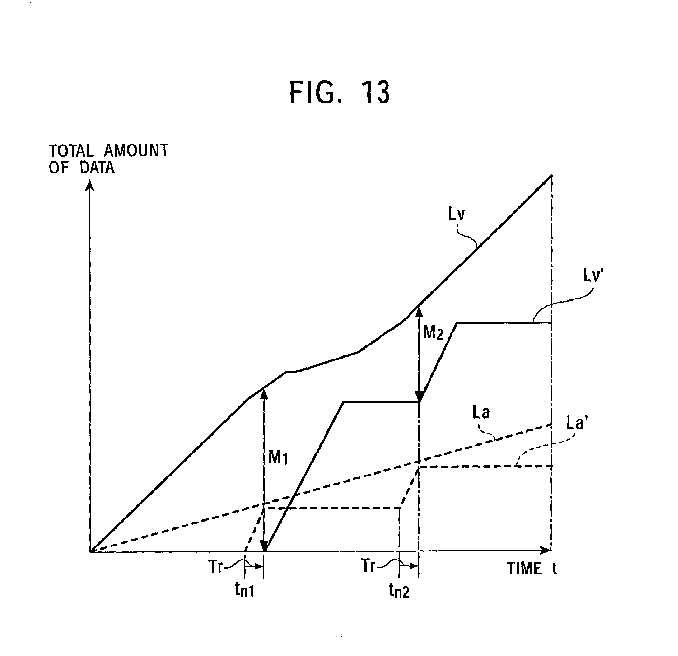

Fig. 13 shows the accumulative amount La of audio data A and the accumulative amount Lv of video data V which are stored in the memory 18 in the mode of data recording onto the optical disk 11, and the accumulative amount La' of audio data A and the accumulative amount Lv' of video data V which are read from the memory 18 in the mode of data reading from the optical disk 11.

As described above, the transfer of the video annual-ring data to the signal processor 16, which is performed in step S26 when Nᵥ = 1, is performed after the transfer of the audio annual-ring data to the signal processor 16 is performed in step S16 when Nₐ = 1. In other words, for example, it is assumed that video data V and audio data A associated with the video data V are simultaneously output from the data converter 19 to the memory controller 17. When the same time represented by audio annual-ring size Tₛₐ and video annual-ring size Tₛᵥ is represented by tₙ, playback time tₙ₁ when Nₐ = Nᵥ = 1 can be represented by 1 × tₙ. In this case, at playback time tₙ₁, the audio annual-ring data is transferred to the signal processor 16, and after the transfer ends, the transfer of the video annual-ring data to the signal processor 16 starts. Even after playback time tₙ₁, audio data A and video data V which are supplied from the data converter 19 to the memory controller 17 are continuously performed. Thus, at the start of the transfer of the video annual-ring data to the signal processor 16 which is performed after the transfer of the audio annual-ring data to the signal processor 16, the amount M1 of video data V which is more than that of video data V at playback time tₙ₁ is stored in the memory 18.

Also, at the start of the transfer of the video annual-ring data to the signal processor 16 which is performed at playback time tₙ₂ (= 2 × tₙ) when Nₐ = Nᵥ = 2 after the transfer of the audio annual-ring data to the signal processor 16, the amount M₂ of video data V which is more than that of video data V at playback time tₙ₂ is similarly stored in the memory 18.

Therefore, despite a state in which, at a playback period, the memory 18 stores a sufficient amount of video data V that can be transferred to the signal processor 16, the video data V that is not transferred at the playback time is also stored in the memory 18. After that, the video data V is transferred. This indicates that the memory 18 stores, so to speak, unnecessary video data V, and the storage capacity of the memory 18 is unnecessarily consumed.

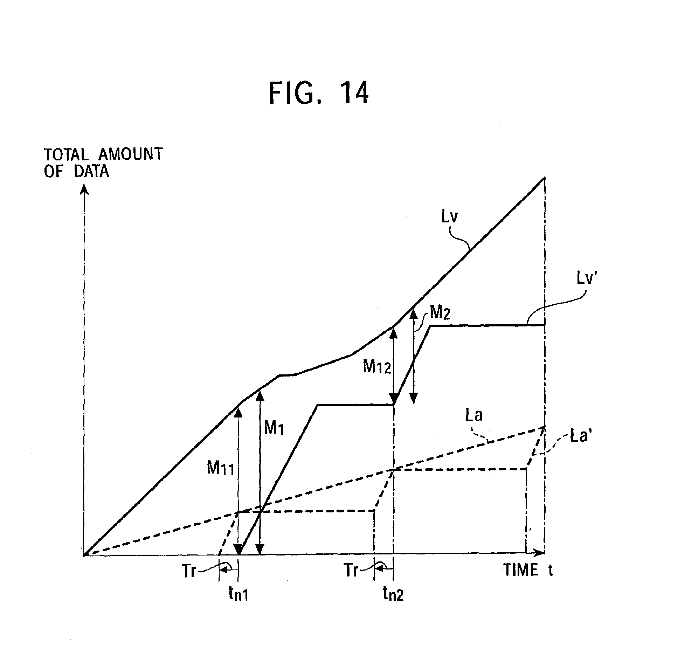

Accordingly, for example, when the data rate (gradients La and La' in Fig. 13) of audio data A is fixed, the period required for writing/reading a certain amount of audio data A on the memory 18 can be found. Thus, in view of the period, as shown in Fig. 14, in order that, for example, at playback time tₙ₁ at which audio data A for playback period tₙ (= Tₛₐ) is actually stored in the memory 18, the transfer of the audio data A to the signal processor 16 may be completed, the transfer of the audio data A can be started period Tr earlier. In this case, the memory 18 simply needs to store the amount m₁₁ of video data V which is less than the amount m₁.

Fig. 14 shows the accumulative amount La of audio data A and accumulative amount Lv of video data V stored in the memory 18, and the accumulative amount La' of audio data A and accumulative amount Lv' of video data V read from the memory 18, in which the accumulative amounts are obtained when the transfer of audio data A is started period Tᵣ earlier compared with the case in Fig. 13.

Also, in the case of Nₐ = Nᵥ = 2, similarly, it is only necessary to store, in the memory 18, the amount M₁₂ of video data V which is less than the amount M₂ of data. In addition, in a case in which Nₐ and Nᵥ are integers more than 2, similarly, it is only necessary to store, in the memory 18, a less amount of video data V.

As described above, by hastening the start of the transfer of audio data A to the signal processor 16, more free areas can be set in the memory 18. In this case, error recovery ability in the recording mode can be enhanced.

In other words, for example, when recording on the optical disk 11 of the audio data A and video data V transferred from the memory 18 to the signal processor 16 fails, the recording must be performed again. Also while the re-recording is being performed, audio data A and video data V are supplied and stored in the memory 18.
Accordingly, by setting more free areas in the memory 18, the memory 18 can be prevented from overflowing by the audio data A and video data V supplied to the memory 18 while the re-recording is being performed.

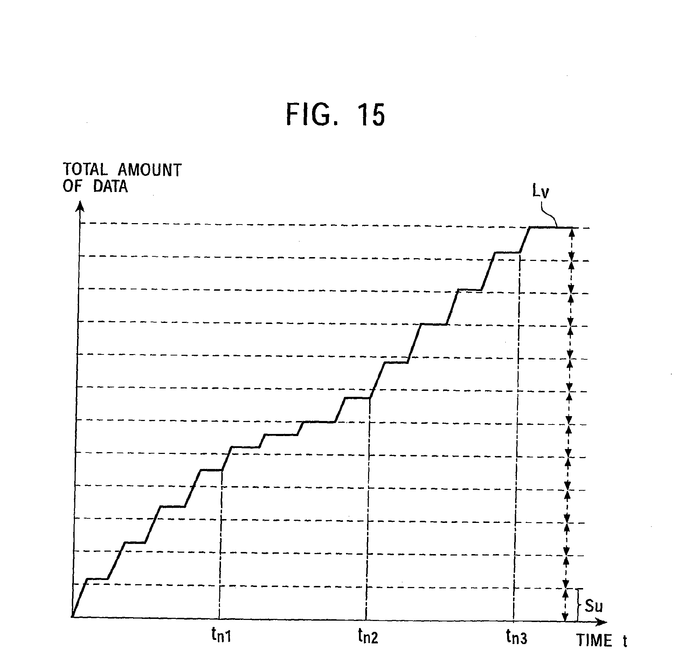

When the video data V has a variable rate, the amount of video data V differs depending on each frame. When it is assumed that a transfer rate from the data converter 19 to the memory 18 through the memory controller 17 is constant, the accumulative amount Lv of video data V stored in the memory 18 changes in steps, for example, as shown in Fig. 15. In Fig. 15, the gradients of upwardly left-to-right sloping linear portions of the solid line indicating the accumulative amount Lv respectively correspond to transfer rates from the data converter 19 to the memory 18. The continuous length (period) of each upwardly left-to-right sloping linear portion depends on the amount of video data V. In other words, the continuous length of each upwardly left-to-right sloping linear portion is large for a frame having a more amount of data, and is conversely small for a frame having a less amount of data. As a result, the accumulative amount Lv of video data V is expressed by a curve from, so to speak, a macroscopic viewpoint.

Although a case in which video data V is recorded after audio data A is recorded has been described, audio data A can be recorded after video data V is recorded.

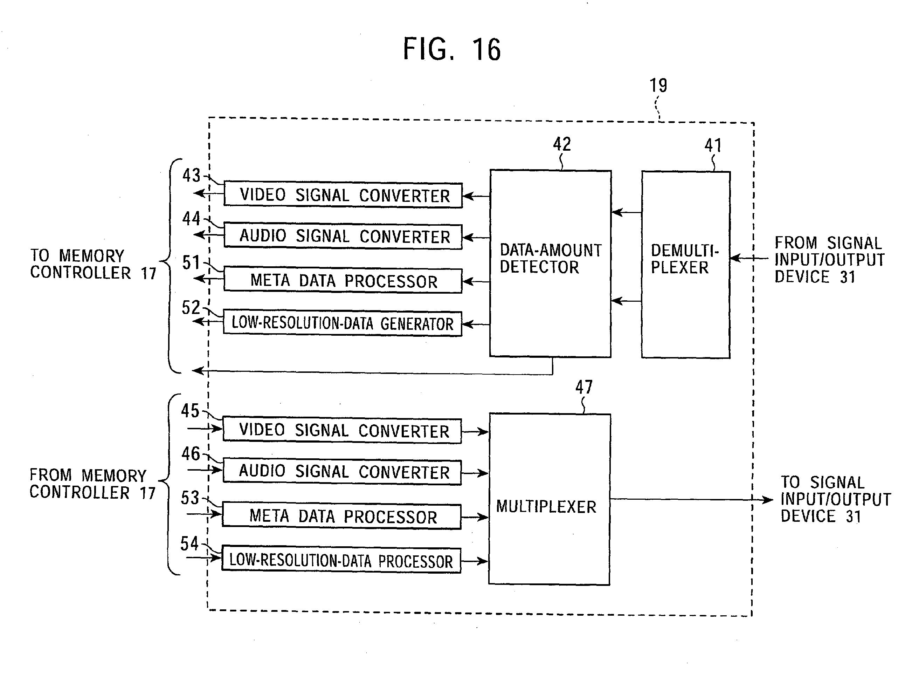

Fig. 16 is another block diagram of the data converter 19 in Fig. 2. In Fig. 16, portions corresponding to those in Fig. 3 are denoted by identical reference numerals, and descriptions thereof are omitted if needed. Specifically, the data converter 19 in Fig. 16 is basically identical to that in Fig. 3, except for a difference in that it further includes a meta-data processor 51, a low-resolution-data generator 52, a meta-data processor 53, and a low-resolution-data generator 54.

In the structure of the data converter 19 in Fig. 3, the demultiplexer 41 separates, from the signal supplied from the signal input/output device 31, as a plurality of related data series, for example, a video signal and an audio signal associated with the video signal. Unlike this structure, in the structure in Fig. 16, the demultiplexer 41 separates, from the signal supplied from the signal input/output device 31, as a plurality of related data series, for example, not only a video signal and an audio signal associated with the video signal, but also meta data concerning the video signal.

In other words, in the mode of data recording to the optical disk 11, the signal input/output device 31 outputs a signal obtained by a video camera (not shown), as described above. The signal obtainable by this video camera can include not only a video signal and an audio signal associated with the video signal which are obtained by capturing pictures of a subject, but also meta data concerning the video signal. In the structure in Fig. 16, from the signals, the demultiplexer 41 also separates the meta data, other than the video signal and the audio signal.

The meta data includes time codes assigned to the video signal for frames, unique material identifiers (UMIDs), global positioning system (GPS) information representing a position of capturing by the video camera, a date and time (year, month, day, hours, minutes, and seconds), Association of Radio Industries and Businesses (ARIB) information, and setting/control information of the video camera in use. The ARIB meta data is meta data standardized meta in the ARIB which is used for superimposition in a communication interface such as a serial digital interface (SDI). The setting/control information of the video camera in use includes, for example, an iris control value, white-balance/black-balance modes, and lens information concerning lens zooming and focusing, etc.

The video signal, audio signal, and meta data obtained by the demultiplexer 41 are supplied to the data-amount detector 42. The data-amount detector 42 supplies the video signal, audio signal, and meta data supplied from the demultiplexer 41 to a video signal converter 43, a audio signal converter 44, and the meta-data processor 51, respectively. The data-amount detector 42 also detects the amounts of the video signal, audio signal, and meta data, and supplies the detected amounts to the memory controller 17. In other words, the data-amount detector 42 detects, for example, the amounts in a predetermined playback period of the video signal, audio signal, and meta data supplied from the demultiplexer 41, and supplies the detected amounts to the memory controller 17.

The data-amount detector 42 also supplies the low-resolution-data generator 52 with the video signal supplied from the demultiplexer 41, and the audio signal, if needed.

The meta-data processor 51 rearranges the components (a time code, a date and time of picture capturing, etc.) of the meta data supplied through the data-amount detector 42 to generate a data series of meta data, if needed, and supplies the data series to the memory controller 17.

The low-resolution-data generator 52 generates a data series of low-resolution data obtained by reducing the amount of the supplied data, and supplies the data series to the memory controller 17.

Specifically, by performing processing (such as reducing the number of pixels) on each frame represented by the video signal supplied through the data-amount detector 42, the low-resolution-data generator 52 generates a reduced video signal that is a video signal representing the frame having a reduced number of pixels. The low-resolution-data generator 52 encodes the reduced video signal, for example, by MPEG-4, and outputs the encoded signal as low-resolution data.

The low-resolution-data generator 52 can output an audio signal obtained by performing processing (such as reduction) on the audio signal supplied through the data-amount detector 42 or samples of the audio signal, with the output audio signal included in the low-resolution data (e.g., in a form in which the output audio signal is multiplexed, for example, in units of frames).

In the above case, a data series of the video data output by the video signal converter 43, the audio data output by the audio signal converter 44, and the data series of the low-resolution data output by the low-resolution-data generator 52 are data series of the video and audio of the same content. The video data output by the video signal converter 43 and the audio data output by the audio signal converter 44 should basically be provided to the user. Accordingly, the video data output by the video signal converter 43 and the audio data output by the audio signal converter 44 are referred to as "main data", if needed.

Although the low-resolution data represents the same content of video and/or audio as the main data, its amount may be small, and any method for reducing the amount of data than that of the main data may be used. Also, when data is played back in a playback period, the low-resolution data can be more rapidly read from the optical disk 11 than the main data.

For example, approximately 25 megabits per second (Mbps) may be employed as the data rate of the main data. In this case, for example, approximately 3 Mbps may be employed as the data rate of the low-resolution data. In addition, in this case, when, for example, approximately 2 Mbps is employed as the data rate of the meta data, the data rate of the entire data recorded on the optical disk 11 is approximately 30 (= 25 + 3 + 2) Mbps. Accordingly, (the disk recording/playback apparatus 10 for driving) the optical disk 11 can employ a data rate in a sufficiently practical range including, for example, a recording rate of 35 Mbps.

As described above, the data converter 19 also supplies data series of the meta data and the low-resolution data other than the data series of the main data (video and audio data) to the memory controller 17. The main data, meta data, and low-resolution data supplied to the memory controller 17 are supplied and recorded on the optical disk 11.

In the mode of playing back data from the optical disk 11, the main data, the meta data, or the low-resolution data is read from the optical disk 11, if needed. Video data and audio data constituting the main data are supplied to the video data converter 45 and the audio data converter 46, respectively. Similarly to the case in Fig. 3, the video data and the audio data are decoded to generate a video signal and an audio signal, and both signals are supplied to the multiplexer 47.

The meta data and the low-resolution data are supplied to the meta-data processor 53 and the low-resolution-data generator 54, respectively. The meta-data processor 53 changes disposed positions of the components of the supplied meta data, if needed, and supplies the processed meta data to the multiplexer 47. The low-resolution-data generator 54 decodes the supplied low-resolution data to generate a video signal and an audio signal which represent reduced amounts of data, and supplies the processed signals to the multiplexer 47.

The multiplexer 47 supplies the video signal supplied from the video data converter 45, the audio signal supplied from the audio data converter 46, the meta data supplied from the meta-data processor 53, and the video signal and audio signal from the low-resolution-data generator 54 which represent reduced amounts of data to the signal input/output device 31. The video signal supplied from the video data converter 45, the audio signal supplied from the audio data converter 46, the meta data supplied from the meta-data processor 53, the video signal and audio signal from the low-resolution-data generator 54 which represent reduced amounts of data can be multiplexed and output or can be separately output in parallel.

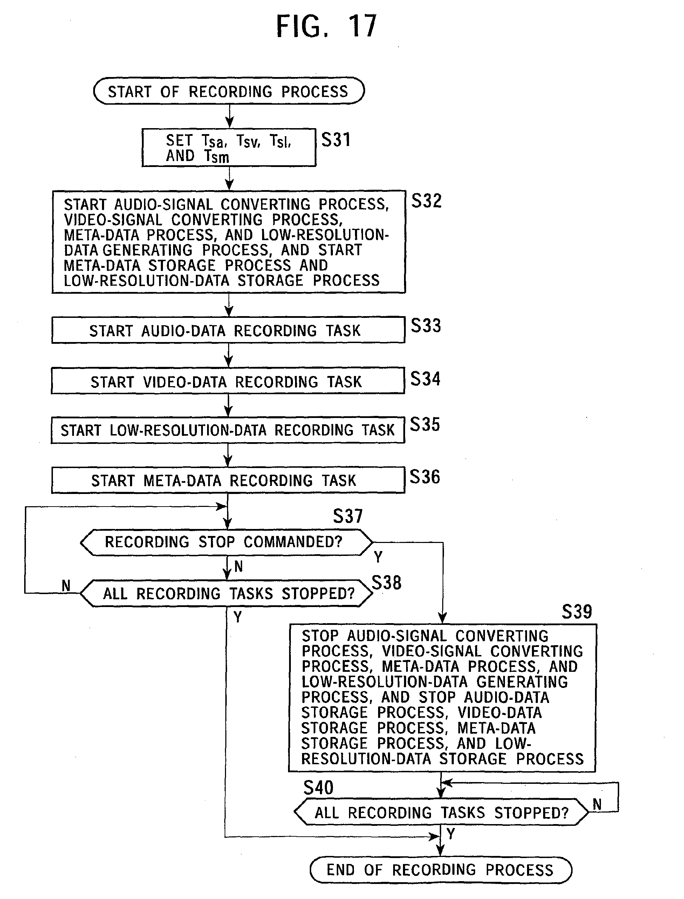

Next, the recording process of the controller 20 which is performed when the data converter 19 has the structure shown in Fig. 16 is described below with reference to the flowchart in Fig. 17.

When an operation signal for commanding the recording process to start is supplied from the operation unit 21 to the controller 20 by operating the operation unit 21, the controller 20 starts the recording process.

At first, in step S31, the controller 20 sets audio annual-ring size Tₛₐ and video annual-ring size Tₛᵥ, and also low-resolution annual-ring size Tₛₗ and meta annual-ring size Tₛₘ.

The low-resolution annual-ring size Tₛₗ is a variable determining an amount of low-resolution data that is collectively recorded on the optical disk 11. Similarly to the above audio annual-ring size Tₛₐ and video annual-ring size Tₛᵥ, the low-resolution annual-ring size Tₛₗ is expressed by, for example, a playback period of a video signal (or audio signal) used as a source of the low-resolution data. Similarly, the meta annual-ring size Tₛₘ is a variable determining the amount of meta data that is collectively recorded on the optical disk 11. Similarly to the above audio annual-ring size Tₛₐ and video annual-ring size Tₛᵥ, the meta annual-ring size Tₛₘ is expressed by a playback period of a video signal in which its meta data describes various types of information (such as a date and time of picture capturing).

The reason that the low-resolution annual-ring size Tₛₗ and the meta annual-ring size Tₛₘ are not expressed by the amount of data such as the number of bits and the number of bytes but are indirectly expressed by a playback period is similar to that in the case of the above audio annual-ring size Tₛₐ and video annual-ring size Tₛᵥ.

In other words, according to the recording process in Fig. 17, as described later, low-resolution annual-ring data which is a set of pieces of low-resolution data by the amount of data based on low-resolution annual-ring size Tₛₗ extracted from a data series of the low-resolution data, and meta annual-ring data which is a set of pieces of meta data by the amount of data based on meta annual-ring size Tₛₘ extracted from a data series of the meta data, as well as audio annual-ring data which is a set of pieces of audio data by the amount of data based on audio annual-ring size Tₛₐ extracted from a series of pieces of audio data A, and video annual-ring data which is a set of pieces of video data by the amount of data based on video annual-ring size Tₛᵥ extracted from a series of pieces of video data V, are periodically recorded in a predetermined pattern.

When the audio annual-ring data, the video annual-ring data, the low-resolution annual-ring data, and the meta annual-ring data are periodically recorded in a predetermined pattern on the optical disk 11, audio annual-ring data and video annual-ring data at a playback time, and low-resolution annual-ring data generated by reducing the amounts of the audio annual-ring data and video annual-ring data at the playback time, must be recorded in close positions on the optical disk 11 because the low-resolution annual-ring data is generated by reducing the amounts of the audio annual-ring data and video annual-ring data. Also, because the meta annual-ring data represents information concerning audio annual-ring data and video annual-ring data, audio annual-ring data and video annual-ring data at a playback time, and meta annual-ring data representing information concerning the annual-ring data and video annual-ring data at the playback time should be recorded in close positions on the optical disk 11.

When each data rate of audio data A and video data V is compared in the same playback period with each data rate of low-resolution data and meta data, the data rate of the low-resolution data and the meta data is smaller than that of audio data A and video data V.

Accordingly, when low-resolution annual-ring size Tₛₗ and meta annual-ring size Tₛₘ are represented by amounts of data, similarly to the case of using amounts of data to represent the above audio annual-ring size Tₛₐ and video annual-ring size Tₛᵥ, a problem occurs in that it is difficult to dispose, in close positions on the optical disk 11, the audio data, the video data, the low-resolution data, and the meta data which must be played back at similar playback times.

In the recording process in Fig. 17, low-resolution annual-ring size Tₛₗ and meta annual-ring size Tₛₘ are also expressed by playback periods similarly to the audio annual-ring size Tₛₐ and the video annual-ring size Tₛᵥ. This makes it possible to dispose, in close positions on the optical disk 11, the audio data, video data, low-resolution data, and meta data which must be played back at similar playback times.

The audio annual-ring size Tₛₐ, video annual-ring size Tₛᵥ, low-resolution annual-ring size Tₛₗ, and meta annual-ring size Tₛₘ set in step S31 may have predetermined fixed values or variable values. When the audio annual-ring size Tₛₐ, video annual-ring size Tₛᵥ, low-resolution annual-ring size Tₛₗ, and meta annual-ring size Tₛₘ are set to be variable, the variable values can be input, for example, by operating the operation unit 21.

After step S31, the controller 20 proceeds to step S32. In step S32, similarly to the case of step S2 in Fig. 4, the controller 20 starts an audio-signal converting process and a video-signal converting process in which, by controlling the data converter 19, the audio signal and video signal, supplied from the signal input/output device 31 to the disk recording/playback apparatus 10, are encoded and compressed to generate series of pieces of audio data A and series of pieces of video data V. The controller 20 also starts an audio-data storage process and a video-data storage process in which, by controlling the memory controller 17, the audio data A and video data V obtained in the data converter 19 are supplied and stored in the memory 18. In step S32, the controller 20 starts a meta-data process in which, by controlling the data converter 19, a series of pieces of the meta data supplied from the signal input/output device 31 to the disk recording/playback apparatus 10, and a low-resolution generating process in which, by controlling the data converter 19, a series of pieces of the low-resolution data is generated from the audio signal and video signal supplied from the signal input/output device 31 to the data converter 19. The controller 20 also starts a meta-data storage process and a low-resolution-data storage process in which, by controlling the memory controller 17, the meta data and low-resolution data obtained in the data converter 19 are supplied and stored in the memory 18.

Sequentially proceeding to steps S33 and S34, the controller 20 starts an audio-data recording task in step S33 which is a control task for recording audio data A on the optical disk 11, and a video-data recording task in step S34 which is a control task for recording video data V on the optical disk 11, and proceeds to step S35. In step S35, the controller 20 starts a low-resolution-data recording task which is a control task for recording the low-resolution data on the optical disk 11, and proceeds to step S36. In step S36, the controller 20 starts a meta-data recording task which is a control task for recording the meta data on the optical disk 11, and proceeds to step S37. Details of the audio-data recording task in step S33, the video-data recording task in step S34, the low-resolution recording task in step S35, and the meta-data recording task in step S36 are described later. The order of steps S33 to S36 may be changed.

In step S37, the controller 20 determines whether it has been supplied with an operation signal for commanding the data recording to stop. If the controller 20 has determined that the operation signal has not been supplied yet, the controller 20 proceeds to step S38 and determines whether all the recording tasks have stopped. In step S38, if the controller 20 has determined negatively, the controller 20 returns to step S37 and repeats similar processing.

In step S38, if the controller 20 has determined that all the recording tasks have stopped, that is, when the audio-data recording task started in step S33, the video-data recording task started in step S34, the low-resolution-data recording task started in step S35, and the meta-data recording task have all stopped, the recording process ends.

In step S37, if the controller 20 has determined that it has been supplied with the operation signal for commanding the data recording to stop, that is, for example, when the user operates the operation unit 21 to stop the data recording, the controller 20 proceeds to step S39. In step S39, the controller 20 stops the audio-signal converting process, video-signal converting process, audio-data storage process, video-data storage process, meta-data process, low-resolution generating process, meta-data storage process, low-resolution-data storage process started in step S32. The controller 20 proceeds to step S40.

Similarly to step S38, in step S40, the controller 20 determines whether all the recording tasks have stopped. In step S40, if the controller 20 has determined that all the recording tasks have not stopped yet, it returns to step S40 and repeats similar processing.

In step S40, if the controller 20 has determined that all the recording tasks have stopped, that is, when the audio-data recording task started in step S33, the video-data recording task started in step S34, the low-resolution-data recording task started in step S35, and the meta-data recording task started in step S36 have all stopped, the recording process ends.

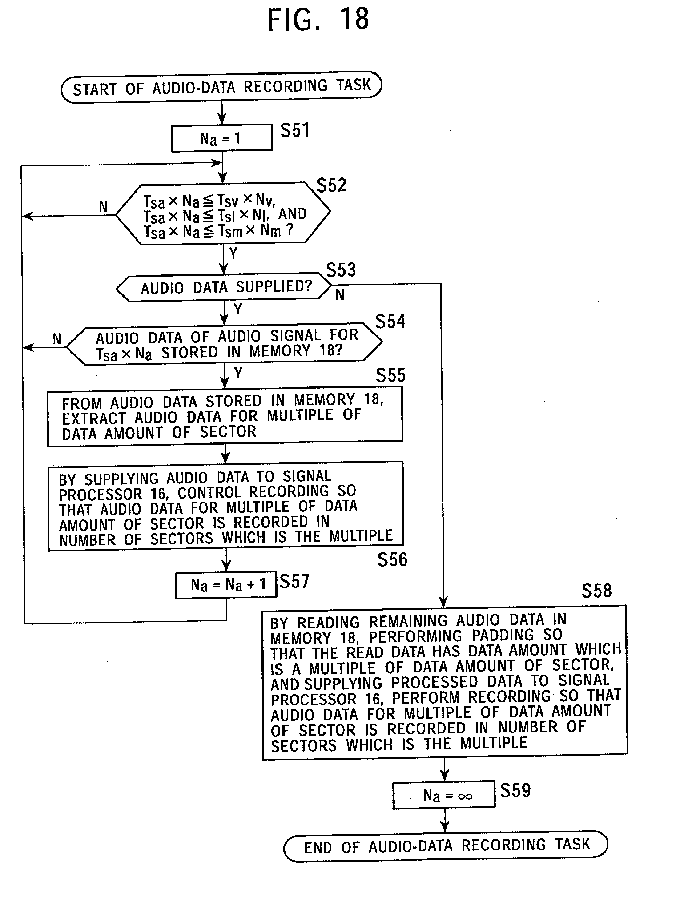

Next, the audio-data recording task started in step S33 in Fig. 17 is described below with reference to the flowchart in Fig. 18.

After the audio-data recording task starts, at first, in step S51, the controller 20 initializes variable Nₐ to, for example, 1. Variable Nₐ is incremented by 1 in step S57 which is later performed. The controller 20 proceeds to step S52.

Similarly to step S12 in Fig. 5, in step S52, the controller 20 determines whether Tₛₐ × Nₐ is not greater than Tₛᵥ × Nᵥ, and further determines whether Tₛₐ × Nₐ is not greater than Tₛₗ × Nₗ and not greater than Tₛₘ × Nₘ.

Here, Tₛₗ represents a low-resolution annual-ring size, and variable Nₗ is incremented by 1 whenever low-resolution data (low-resolution annual-ring data) having the amount of data based on low-resolution annual-ring size Tₛₑ is recorded on the optical disk 11 in the low-resolution-data recording task, as described later. Tₛₘ represents a meta annual-ring size, and variable Nₘ is incremented by 1 whenever meta data having the amount of data based on meta annual-ring size Tₛₘ is recorded on the optical disk 11 in the meta-data recording task, as described later. Thus, Tₛₗ × Nₗ corresponds to the last playback time of low-resolution annual-ring data to be recorded on the optical disk 11 when low-resolution data is recorded in units of each low-resolution annual-ring size Tₛₑ, and Tₛₘ × Nₘ corresponds to the last playback time of meta annual-ring data to be recorded on the optical disk 11 when meta data is recorded in units of each meta annual-ring size Tₛₘ.

In order that audio annual-ring data, video annual-ring data, low-resolution annual-ring data, and meta annual-ring data at close playback times may be recorded in close positions on the optical disk 11, they are periodically disposed in a predetermined pattern. Regarding audio annual-ring data, video annual-ring data, low-resolution annual-ring data, and meta annual-ring data, data is disposed in a forwarder position (a position based on the order in which data on the optical disk 11 is read/written) on the optical disk 11 in proportional to the earliness of the playback time of the data. Regarding audio annual-ring data, video annual-ring data, low-resolution annual-ring data, and meta annual-ring data which are positioned at close playback times, they are disposed in forwarder positions on the optical disk 11, for example, in the order of the audio annual-ring data, the video annual-ring data, the low-resolution annual-ring data, and the meta annual-ring data.

In this case, audio annual-ring data of interest as audio annual-ring data to be recorded is audio annual-ring data at the latest playback time prior to playback time Tₛₐ × Nₐ (closest to playback time Tₛₐ × Nₐ). This audio annual-ring data of interest must be recorded just before video annual-ring data, low-resolution annual-ring data, and meta annual-ring data at the latest time prior to playback time Tₛₐ × Nₐ are recorded, that is, just after video annual-ring data, low-resolution annual-ring data, and meta annual-ring data at the second latest time prior to playback time Tₛₐ × Nₐ are recorded.

Video annual-ring data to be recorded is video annual-ring data at the latest time prior to Tₛᵥ × Nᵥ. Low-resolution annual-ring data to be recorded is low-resolution annual-ring data at the latest playback time prior to Tₛₗ × Nₗ. Meta annual-ring data to be recorded is meta annual-ring data at the latest playback time prior to Tₛₘ × Nₘ. Regarding annual-ring data at similar playback times, the audio annual-ring data is disposed in a forwarder position on the optical disk 11, as described above. Recording of the audio annual-ring data of interest must be performed with timing in which playback time Tₛₐ × Nₐ of the audio annual-ring data is not greater than playback time Tₛᵥ × Nᵥ of the video annual-ring data, and is not greater than playback time Tₛₗ × Nₗ of the low-resolution annual-ring data and not greater than playback time Tₛₘ × Nₘ of the meta annual-ring data.

Accordingly, in step S52, as described above, it is determined whether playback time Tₛₐ × Nₐ of audio annual-ring data is not greater than playback time Tₛᵥ × Nᵥ of video annual-ring data, is not greater than playback time Tₛₗ × Nₗ of low-resolution annual-ring data, and is not greater than playback time Tₛₘ × Nₘ of meta annual-ring data. This determines whether the present time is used as timing with which the audio annual-ring data of interest should be recorded.

In step S52, if it is determined that playback time Tₛₐ × Nₐ of audio annual-ring data is not greater than (equal to or before) one of playback time Tₛᵥ × Nᵥ of video annual-ring data, playback time Tₛₗ x Nₗ of low-resolution annual-ring data, and playback time Tₛₘ × Nₘ of meta annual-ring data, that is, when the present time is not used as timing with which the audio annual-ring data of interest should be recorded, the task returns to step S52 and subsequently repeats similar processing.

In step S52, if it is determined that playback time Tₛₐ × Nₐ of audio annual-ring data is not greater than all of playback time Tₛᵥ × Nᵥ of video annual-ring data, playback time Tₛₗ × Nₗ of low-resolution annual-ring data, and playback time Tₛₘ × Nₘ of meta annual-ring data, that is, when the present time is used as timing with which the audio annual-ring data of interest should be recorded, the task proceeds to step S53, and performs processing in steps S53 to S59 respectively identical to steps S13 to S19 in Fig. 5. After that, the audio-data recording task ends.

Similarly to the case of the audio-data recording task in Fig. 5, this causes also the audio-data recording task in Fig. 18 to record, for example, an amount of audio annual-ring data which is an integral multiple of as a physical unit area on the optical disk 11, for example, the amount of data in one sector, in a predetermined pattern in the number of sectors represented by the integral multiple so that the boundaries of the audio annual-ring data match the boundaries of the sectors on the optical disk 11.

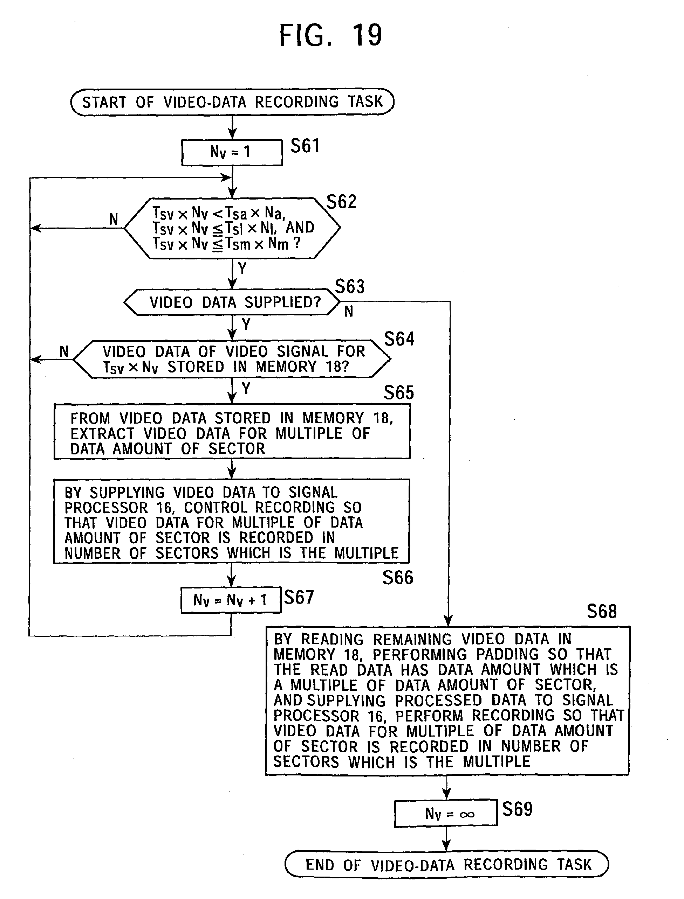

Next, the video-data recording task started in step S34 in Fig. 17 is described below with reference to the flowchart in Fig. 19.

After the video-data recording task starts, at first, in step S61, the controller 20 initializes variable Nᵥ, for example, to 1, and proceeds to step S62. Variable Nᵥ is incremented by 1 in step S67 described later.

In step S62, the controller 20 determines whether Tₛᵥ × Nᵥ is less than Tₛₐ × Nₐ, is not greater than Tₛₗ × Nₗ, and is not greater than Tₛₘ × Nₘ.

As described above, Tₛₐ × Nₐ corresponds to the last playback time of audio annual-ring data to be recorded on the optical disk 11 in the case of recording audio data in units of each audio annual-ring size Tₛₐ, and Tₛᵥ × Nᵥ corresponds to the last playback time of video annual-ring data to be recorded on the optical disk 11 in the case of recording video data in units of each video annual-ring size Tₛᵥ. A state in which Tₛᵥ × Nᵥ is less than Tₛₐ × Nₐ is a condition for recording video annual-ring data of interest as video annual-ring data to be recorded, just after recording audio annual-ring data at the latest playback time prior to playback time Tₛₐ × Nₐ, as described with reference to step S22 in Fig. 8.

In addition, similarly to the case in step S52 in Fig. 18, a state in which Tₛᵥ × Nᵥ is not greater than Tₛₗ × Nₗ is a condition for recording video annual-ring data of interest as video annual-ring data to be recorded, that is, video annual-ring data at the latest time (closest to playback time Tₛᵥ × Nᵥ) prior to playback time Tₛᵥ × Nᵥ just before low-resolution annual-ring data at the latest time prior to playback time Tₛᵥ × Nᵥ, that is, just after low-resolution annual-ring data at the second latest time prior to playback time Tₛᵥ × Nᵥ is recorded.

Similarly to the case in step S52 in Fig. 18, a state in which Tₛᵥ × Nᵥ is not greater than Tₛₘ × Nₘ is a condition for recording the video annual-ring data of interest as video annual-ring data to be recorded, that is, video annual-ring data at the playback time prior to playback time Tₛᵥ × Nᵥ just before meta annual-ring data at the latest time prior to playback time Tₛᵥ × Nᵥ, that is, just after recording meta annual-ring data at the second latest time prior to playback time Tₛᵥ × Nᵥ.

In step S62, if it is determined that playback time Tₛᵥ × Nᵥ of video annual-ring data is not less than playback time Tₛₐ × Nₐ of audio annual-ring data, is greater than playback time Tₛₗ × Nₗ of low-resolution annual-ring data, or is greater than playback time Tₛₘ × Nₘ of meta annual-ring data, that is, when the present time is not used as timing with which the video annual-ring data of interest should be recorded, the task returns to step S62 and subsequently repeats similar processing.

In step S62, if it is determined that playback time Tₛᵥ × Nᵥ of video annual-ring data is less than playback time Tₛₐ × Nₐ of audio annual-ring data, is not greater than playback time Tₛₗ × Nₗ of low-resolution annual-ring data, and is not greater than playback time Tₛₘ × Nₘ of meta annual-ring data, that is, when the present time is used as timing with which the video annual-ring data of interest should be recorded, the task proceeds to step S63, and performs steps S63 to S69 respectively identical to steps S23 to S29 in Fig. 8. After that, the audio-data recording task ends.

Accordingly, similarly to the case of the video-data recording task in Fig. 8, also in the video-data recording task in Fig. 19, an amount of video annual-ring data which is an integral multiple of a physical unit area on the optical disk 11, for example, the amount of data in one sector, is periodically recorded in a predetermined pattern in the number of sectors represented by the integral multiple so that the boundaries of the video annual-ring data match the boundaries of the sectors on the optical disk 11.

Next, the low-resolution-data recording task started in step S35 in Fig. 17 is described below with reference to the flowchart in Fig. 20.

After the low-resolution-data recording task starts, at first, in step S71, the controller 20 initiates variable N₁, for example, to 1, and proceeds to step S72. Variable N₁ is incremented by 1 in step S77 described later.

In step S72, the controller 20 determines whether Tₛₗ × Nₗ is less than Tₛₐ × Nₐ, is less than Tₛᵥ × Nᵥ, and is not greater than Tₛₘ × Nₘ.

Similarly to the case of step S22 in Fig. 8, a state in which Tₛₗ × Nₗ is less than Tₛₐ × Nₐ is a condition for recording low-resolution annual-ring data of interest as low-resolution annual-ring data to be recorded just after recording audio annual-ring data at the latest playback time prior to playback time Tₛₗ × Nₗ. Also, a state in which Tₛₗ × Nₗ is less than Tₛᵥ × Nᵥ is, similarly to the case of step S22 in Fig. 8, a condition for recording low-resolution annual-ring data of interest as low-resolution annual-ring data to be recorded, that is, low-resolution annual-ring data at the latest time (closest to playback time Tₛₗ × Nₗ) prior to playback time Tₛₗ × Nₗ, just before meta annual-ring data in the latest playback time prior to playback time Tₛₗ × Nₗ, that is, just after recording meta annual-ring data at the second latest playback time prior to playback time Tₛₗ × Nₗ.

In addition, similarly to the case of step S52 in Fig. 18, a state in which Tₛₗ × Nₗ is equal to or less than Tₛₘ × Nₘ is a condition for recording low-resolution annual-ring data of interest as low-resolution annual-ring data to be recorded, that is, low-resolution annual-ring data at the latest (closest to playback time Tₛₗ × Nₗ) playback time prior to Tₛₗ × Nₗ, just before meta annual-ring data at the latest playback time prior to playback time Tₛₗ × Nₗ, that is, just after recording meta annual-ring data at the second latest playback time prior to playback time Tₛₗ × Nₗ.

In step S72, if the controller 20 has determined that playback time Tₛₗ × Nₗ of low-resolution annual-ring data is not less than playback time Tₛₐ × Nₐ of audio annual-ring data, is not less than playback time Tₛᵥ × Nᵥ of video annual-ring data, or is greater than playback time Tₛₘ × Nₘ of meta annual-ring data, that is, when the present time is not used as timing with which the low-resolution annual-ring data of interest should be recorded, the controller 20 returns to step S72 and subsequently repeats similar processing.

Also, in step S72, if the controller 20 has determined that playback time Tₛₗ × Nₗ of low-resolution annual-ring data is less than playback time Tₛₐ × Nₐ of audio annual-ring data, is less than playback time Tₛᵥ × Nᵥ of video annual-ring data, and is not greater than playback time Tₛₘ × Nₘ of meta annual-ring data, that is, when the present time is used as timing with which the low-resolution annual-ring data of interest should be recorded, the controller 20 proceeds to step S73 and determines whether the low-resolution annual-ring data is supplied from the data converter 19 to the memory 18 through the memory controller 17. If the controller 20 has determined that the low-resolution data is supplied, it proceeds to step S74.

In step S74, the controller 20 determines whether the memory 18 accumulatively stores the low-resolution data required for playback of low-resolution annual-ring size Tₛₗ × Nₗ. If the controller 20 has determined that the memory 18 has not stored the low-resolution data yet, the controller 20 returns to step S72 and subsequently repeats similar processing. In step S74, if the controller 20 has determined that the memory 18 stores the low-resolution data required for playback in playback period Tₛₗ × Nₗ, the controller 20 proceeds to step S75.

When the data-amount detector 42 in the data converter 19 detects the video signal and audio signal required for playback in playback period Tₛₗ × Nₗ, it notifies the memory controller 17 of the detection. Based on the notification, the memory controller 17 determines whether the memory 18 accumulatively stores the low-resolution data required for playback period Tₛₗ × Nₗ, and notifies the controller 20 of the result of the determination. The controller 20 determines based on the result of the determination. Although in this embodiment a data-reduced video signal or the like in encoded and compressed form is used as low-resolution data, a data-reduced video signal or the like can be directly used as low-resolution data.

In step S75, the controller 20 controls the memory controller 17 to extract, from the low-resolution data stored in the memory 18, in temporally inputted order, the maximum amount of low-resolution data which can be read from the memory 18 and which is an integral multiple of (n times) a physical recording/playback unit (physical unit area) formed on the optical disk 11, for example, the amount Su of data in one sector. After that, the controller 20 proceeds to step S76.

The low-resolution annual-ring data read from the memory 18, as the maximum amount of low-resolution data which can be read from the memory 18 and which is an integral multiple of the amount of data in one sector, is the above-described latest low-resolution annual-ring data prior to playback time Tₛₗ × Nₗ.

Low-resolution data unread in step S75 remains unchanged in the memory 18.

In step S76, the controller 20 controls the memory controller 17 to supply the signal processor 16 with the low-resolution annual-ring data of interest obtained in step S75 which is an integral multiple of the amount of data in one sector. This controls recording so that the low-resolution annual-ring data of interest which is an integral multiple of the amount of data in one sector can be recorded in the number of sectors represented by the multiple. Accordingly, the amount of low-resolution annual-ring data which is the integral multiple of the amount of data in one sector is recorded in the number of sectors represented by the integral multiple so that the boundaries of the low-resolution annual-ring data match the boundaries of the sectors on the optical disk 11.

After that, proceeding to step S77, the controller 20 increments variable N₁ by 1, and returns to step S72 and subsequently repeats similar processing.

In step S73, if the controller 20 has determined that the low-resolution data is not supplied to the memory 18, that is, when the supply of the low-resolution data from the data converter 19 to the memory controller 17 stops, the controller 20 proceeds to step S78. In step S78, the controller 20 controls the memory controller 17 to read all the low-resolution data remaining in the memory 18 and to add padding data to the read data so that its amount is the amount of data which is the least multiple of the amount of data in one sector. In this manner, the low-resolution data read from the memory 18 is processed to form an amount of low-resolution annual-ring data which is an integral multiple of the amount of data in one sector. The controller 20 controls the memory controller 17 to supply the low-resolution annual-ring data to the signal processor 16, thereby controlling recording so that the amount of low-resolution annual-ring data which is an integral multiple of the amount of data in one sector can be recorded in the number of sectors represented by the multiple.

After that, proceeding to step S79, the controller 20 sets a value corresponding to infinity, as variable Nₗ, and stops the low-resolution-data recording task.

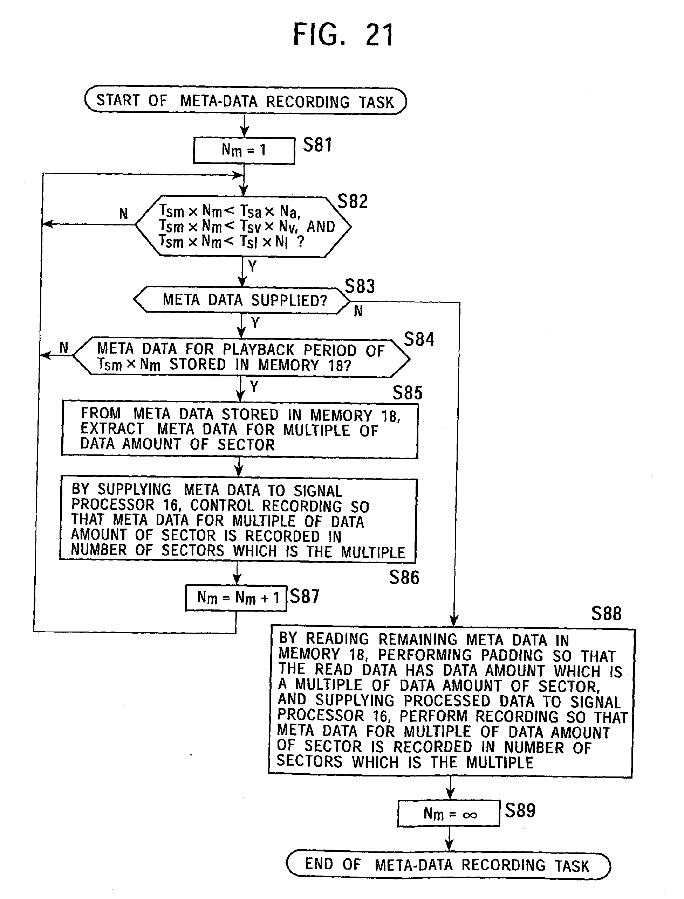

Next, the meta-data recording task started in step S36 in Fig. 17 is described below with reference to the flowchart in Fig. 21.

After the meta-data recording task starts, at first, in step S81, the controller 20 initializes variable Nₗ, for example, to 1, and proceeds to step S82. Variable Nₗ is incremented by 1 in step S87 described later.

In step S82, the controller 20 determines whether Tₛₘ × Nₘ is less than Tₛₐ × Nₐ, is less than Tₛᵥ × Nᵥ, and is less than Tₛₗ × Nₗ.

Similarly to the case of step S22 in Fig. 8, a state in which Tₛₘ × Nₘ is less than Tₛₐ × Nₐ is a condition for recording, just after recording audio annual-ring data at the latest time prior to playback Tₛₘ × Nₘ, meta annual-ring data to be recorded. Similarly to the case of step S22 in Fig. 8, a state in which Tₛₘ × Nₘ is less than Tₛᵥ × Nᵥ is a condition for recording, just after recording video annual-ring data at the latest time prior to playback time Tₛₘ × Nₘ, meta annual-ring data of interest as meta annual-ring data to be recorded. Similarly, a state in which Tₛₘ × Nₘ is less than Tₛₗ × Nₗ is a condition for recording, just after recording low-resolution annual-ring data at the latest time prior to playback time Tₛₘ × Nₘ, meta annual-ring data of interest as meta annual-ring data to be recorded.

In step S83, if the controller 20 has determined that playback time Tₛₘ × Nₘ of meta annual-ring data is not less than playback time Tₛₐ × Nₐ, is not less than playback time Tₛᵥ × Nᵥ of video annual-ring data, or is not less than playback time Tₛₗ × Nₗ of meta annual-ring data, that is, when the present time is not used as timing with which the meta annual-ring data of interest should be recorded, the controller 20 returns to step S82 and subsequently repeats similar processing.

In step S82, if the controller 20 has determined that playback time Tₛₘ × Nₘ of meta annual-ring data is less than playback time Tₛₐ × Nₐ of audio annual-ring data, is less than playback time Tₛᵥ × Nᵥ of video annual-ring data, and is less than playback time Tₛₗ × Nₗ of low-resolution annual-ring data, that is, when the present time is used as timing with which the meta annual-ring data of interest should be recorded, the controller 20 proceeds to step S83. In step S83, the controller 20 determines whether meta data is supplied from the data converter 19 to the memory 18 through the memory controller 17. If the controller 20 has determined that the meta data is supplied, it proceeds to step S84.

In step S84, the controller 20 determines whether the memory 18 accumulatively stores the meta data required for playback of meta annual-ring size Tₛₘ × Nₘ. If the controller 20 has determined that the memory 18 has not stored the meta data yet, the controller 20 returns to step S82 and subsequently repeats similar processing. In step S84, if the controller 20 has determined that the memory 18 stores the meta data required for playback of meta annual-ring size Tₛₘ × Nₘ, the controller 20 proceeds to step S85.

When the data-amount detector 42 in the data converter 19 detects the accumulated video signal and audio signal required for playback in Tₛₘ × Nₘ, it notifies the memory controller 17 of the detection. Based on the notification, the memory controller 17 determines whether the memory 18 accumulatively stores the meta data required for playback in playback period Tₛₘ × Nₘ, and notifies the controller 20 of the result of the determination. The controller 20 determines in step S84 based on the result of the determination from the memory controller 17.

In step S85, the controller 20 controls the memory controller 17 to extract, from the meta data stored in the memory 18, in temporally inputted order, the maximum amount of meta data which can be read from the memory 18 and which is an integral multiple of (n times) a physical recording/playback unit (physical unit area), for example, the amount of data in one sector. The controller 20 proceeds to step S86.

The meta annual-ring data read from the memory 18 which is an integral multiple of the amount of data in one sector and which can be read as the maximum amount of meta data from the memory 18 is the above-described latest meta annual-ring data prior to playback time Tₛₘ × Nₘ.

Meta data unread in step S85 remains unchanged in the memory 18.

In step S86, the controller 20 controls the memory controller 17 to supply the signal processor 16 with the amount of meta annual-ring data of interest obtained in step S85 which is an integral multiple of the amount of data in one sector, thereby controlling recording so that the amount of meta annual-ring data of interest which is an integral multiple of the amount of data in one sector can be recorded in the number of sectors represented by the multiple. In this manner, the amount of meta annual-ring data of interest which is an integral multiple of the amount of data in one sector is periodically recorded in a predetermined pattern so that the boundaries of the meta annual-ring data match the boundaries of the sectors on the optical disk 11.

After that, proceeding to step S87, the controller 20 increments variable Nₘ by 1, and returns to step S82 and subsequently repeats similar processing.

In step S83, if the controller 20 has determined that the meta data is not supplied to the memory 18, that is, when the supply of the meta data from the data converter 19 to the memory controller 17 stops, the controller 20 proceeds to step S88. In step S88, the controller 20 controls the memory controller 17 to read all the meta data remaining in the memory 18 and to add padding data to the read data so that its amount is the least multiple of the amount of data in one sector. This processes the meta data read from the memory 18 to form the amount of meta annual-ring data which is an integral multiple of the amount of data in one sector. The controller 20 controls the memory controller 17 to supply the meta annual-ring data to the signal processor 16, thereby controlling recording so that the amount of meta annual-ring data which is an integral multiple of the amount of data in one sector can be recorded in the number of sectors represented by the multiple.

After that, proceeding to step S89, the controller 20 sets a value corresponding to infinity as variable Nₘ, and ends the meta-data recording task.

Audio annual-ring data, video annual-ring data, low-resolution annual-ring data, and meta annual-ring data at similar playback times are periodically recorded in a predetermined pattern on the optical disk 11 in the order of audio annual-ring data, video annual-ring data, low-resolution annual-ring data, and meta annual-ring data by the determinations in step S52 of the audio-data recording task in Fig. 18, in step S62 of the video-data recording task in Fig. 19, in step S72 of the low-resolution-data recording task in Fig. 20, and in step S82 of the meta-data recording task in Fig. 21.

However, the order of priorities for use in recording audio annual-ring data, video annual-ring data, low-resolution annual-ring data, and meta annual-ring data is not limited to the above order of audio annual-ring data, video annual-ring data, low-resolution annual-ring data, and meta annual-ring data.

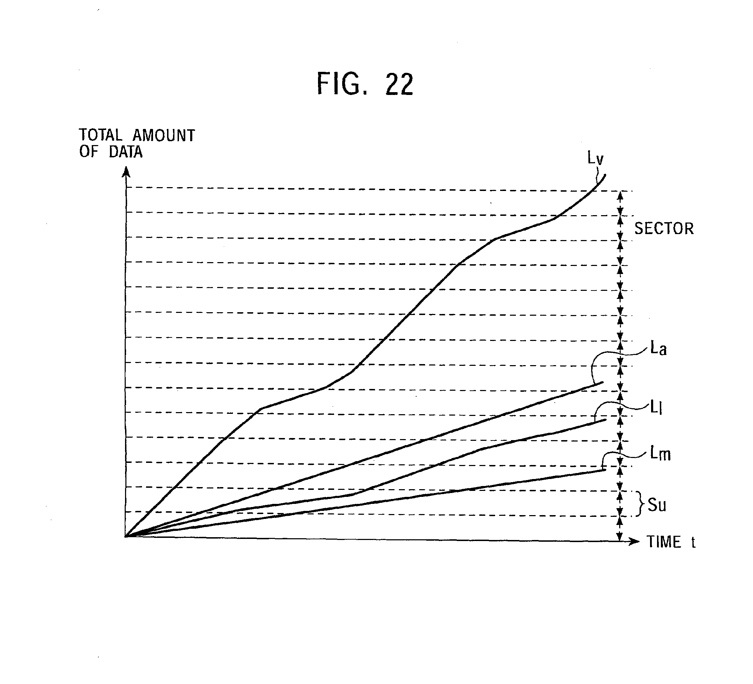

Next, the memory controller 17 performs data reading from the memory 18 to extract audio annual-ring data, video annual-ring data, low-resolution annual-ring data, and meta annual-ring data. A process for generating (extracting) the audio annual-ring data, the video annual-ring data, the low-resolution annual-ring data, and the meta annual-ring data is described below with reference to Figs. 22 to 26.

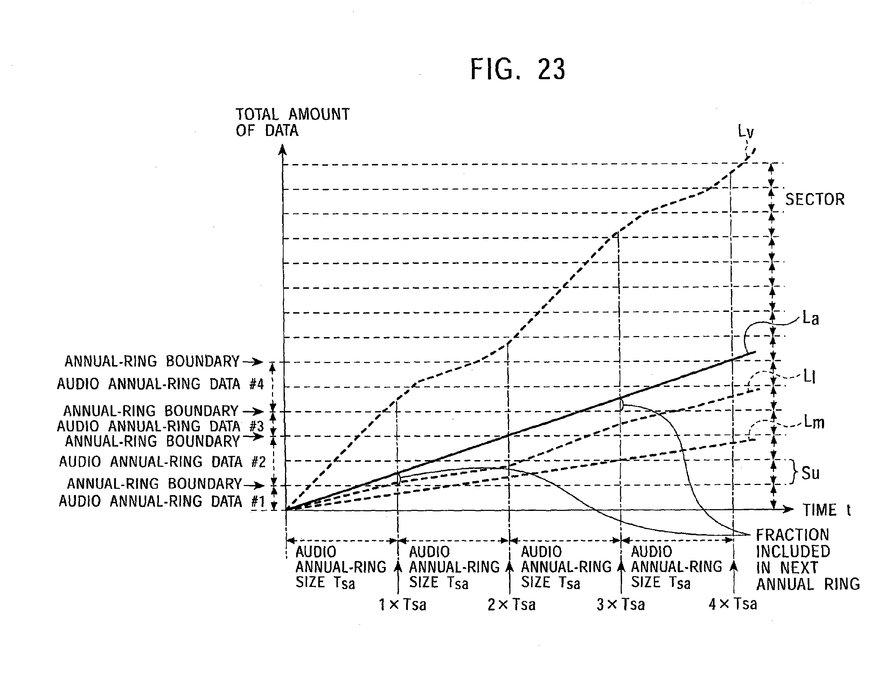

Fig. 22 shows relationships with time (playback period) of the total amount La of the audio data accumulatively stored in the memory 18, the total amount Lv of the video data accumulatively stored in the memory 18, the total amount Ll of the low-resolution data accumulatively stored in the memory 18, and the total amount Lm of the meta data accumulatively stored in the memory 18. In Fig. 22 (also in Figs. 23 to 26), each set of small arrows (indicating the distance between horizontal dotted lines) on the right side indicates the amount Su of data.

As described above, when the audio data required for playback in playback period Tₛₐ × Nₐ is stored in the memory 18, the memory controller 17 reads and extracts, as audio annual-ring data, the maximum amount of audio data which can be read from the memory 18 and which is an integral multiple of the amount of data in one sector. When the video data required for playback in playback period Tₛᵥ × Nᵥ is stored in the memory 18, the memory controller 17 reads and extracts, as video annual-ring data, the maximum amount of video data which can be read from the memory 18 and which is an integral multiple of the amount of data in one sector. When the low-resolution data required for playback in playback period Tₛₗ × Nₗ is stored in the memory 18, the memory controller 17 reads and extracts, as low-resolution annual-ring data, the maximum amount of low-resolution data which can be read from the memory 18 and which is an integral multiple of the amount of data in one sector. When the meta data required for playback in playback period Tₛₘ × Nₘ is stored in the memory 18, the memory controller 17 reads and extracts, as meta annual-ring data, the maximum amount of meta data which can be read from the memory 18 and which is an integral multiple of the amount of data in one sector.

Accordingly, as shown in Fig. 22, the total amount La of the audio data stored in the memory 18 changes, as Fig. 23 shows, the memory controller 17 reads and extracts, as audio annual-ring data, the maximum amount of audio data which can be read from the memory 18 and which is an integral multiple of the amount of data in one sector with timing in which time t is i × Tₛₐ (i = 1, 2,...) which is an integral multiple of audio annual-ring size Tₛₐ.

In the example in Fig. 23, with timing in which time t is Tₛₐ, 2 × Tₛₐ, 3 × Tₛₐ, or 4 x Tₛₐ, audio data for one sector, audio data for two sectors, audio data for one sector, or audio data for two sectors is extracted as audio annual-ring data #1, audio annual-ring data #2, audio annual-ring data #3, or audio annual-ring data #4.

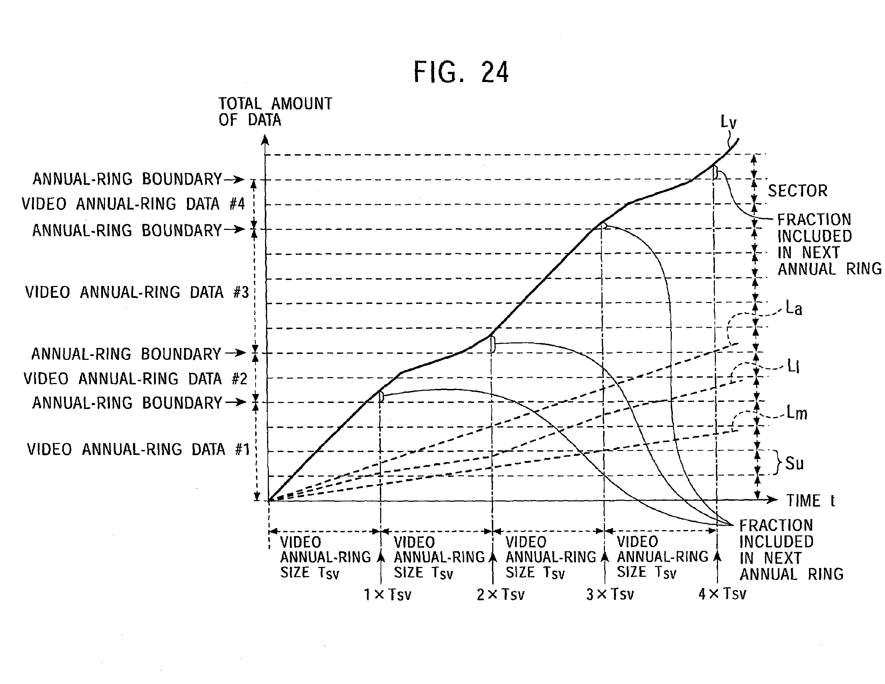

As shown in Fig. 22, when the total amount Lv of the video data stored in the memory 18 changes, as Fig. 24 shows, the memory controller 17 reads and extracts, as video annual-ring data, the maximum amount of video data which can be read from the memory 18 and which is an integral multiple of the amount of data in one sector with timing in which time t is i × Tₛᵥ which is an integral multiple of video annual-ring size Tₛᵥ.

In the example in Fig. 24, with timing in which time t is Tₛᵥ, 2 × Tₛᵥ, 3 × Tₛᵥ, or 4 × Tₛᵥ, video data for four sectors, video data for two sectors, video data for five sectors, or video data for two sectors is extracted as video annual-ring data #1, video annual-ring data #2, video annual-ring data #3, or video annual-ring data #4.

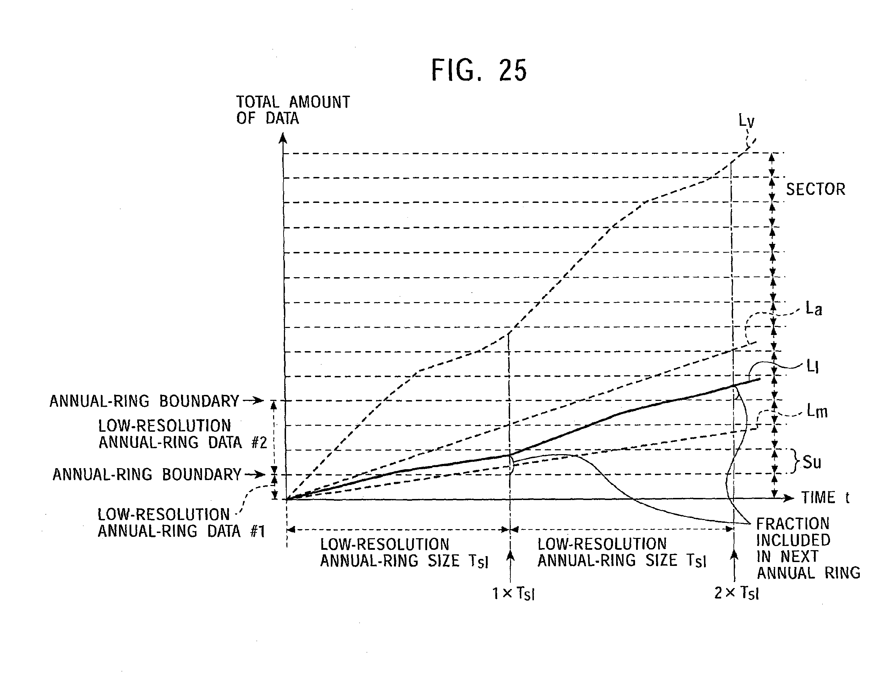

As shown in Fig. 22, when the total amount L1 of the low-resolution data stored in the memory 18 changes, as Fig. 25 shows, the memory controller 17 reads and extracts, as low-resolution annual-ring data, the maximum amount of low-resolution data which can be read from the memory 18 and which is an integral multiple of the amount of data in one sector with timing in which time t is i × Tₛₗ which is an integral multiple of low-resolution annual-ring size Tₛₗ.

In the example in Fig. 25, with timing in which time t is Tₛₗ, or 2 × Tₛₗ, low-resolution data for one sector or low-resolution data for three sectors is extracted as low-resolution annual-ring data #1 or low-resolution annual-ring data #2.

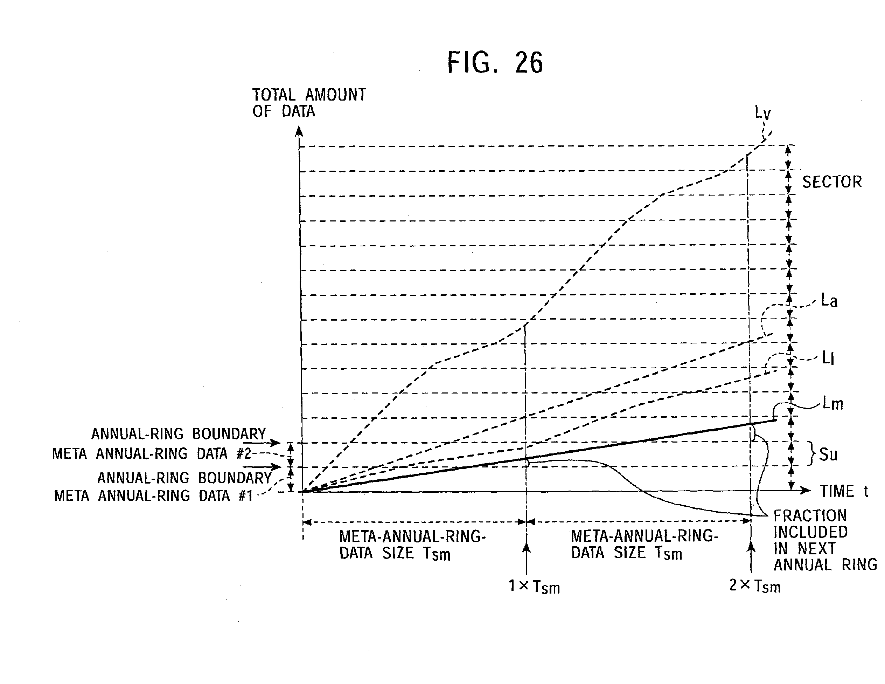

As shown in Fig. 22, when the total amount Lm of the meta data stored in the memory 18 changes, as Fig. 26 shows, the memory controller 17 reads and extracts, as meta annual-ring data, the maximum amount of meta data which can be read from the memory 18 and which is an integral multiple of the amount of data in one sector with timing in which time t is i × Tₛₘ which is an integral multiple of meta annual-ring size Tₛₘ.

In the example in Fig. 26, with timing in which time t is Tₛₘ or 2 × Tₛₘ, meta data for one sector is extracted as meta annual-ring data #1 or meta annual-ring data #2.

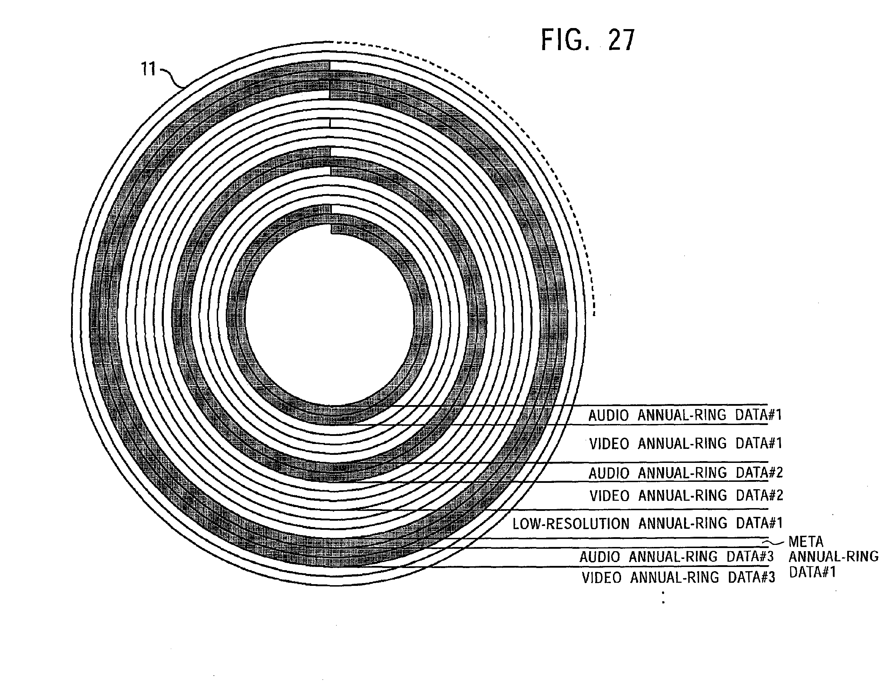

Regarding the audio annual-ring size Tₛₐ shown in Fig. 23, the video annual-ring size Tₛᵥ shown in Fig. 24, the low-resolution annual-ring size Tₛₗ shown in Fig. 25, and the meta annual-ring size Tₛₘ shown in Fig. 26, when it is, for example, assumed that the sizes have relationships in which the video annual-ring size Tₛᵥ is equal to the audio annual-ring size Tₛₐ, and the low-resolution annual-ring size Tₛₗ and the meta annual-ring size Tₛₘ are each equal to the double of the audio annual-ring size audio annual-ring size Tₛₐ (2 × Tₛₐ = 2 × Tₛᵥ = Tₛₗ = Tₛₘ), according to the audio-data recording task shown in Fig. 18, the video-data recording task shown in Fig. 19, the low-resolution-data recording task shown in Fig. 20, and the meta-data recording task shown in Fig. 21, the meta annual-ring data #1 to #4 in Fig. 23, the video annual-ring data #1 to #4 in Fig. 24, the low-resolution annual-ring data #1 and #2 in Fig. 25, and the meta annual-ring data #1 and #2 in Fig. 26 are periodically recorded in a predetermined pattern on the optical disk 11, as shown in Fig. 27.

In other words, as described above, audio annual-ring data, video annual-ring data, low-resolution annual-ring data, and meta annual-ring data at similar times are recorded in forwarder positions on the optical disk 11 in the order by priority of the audio annual-ring data, the video annual-ring data, the low-resolution annual-ring data, and the meta annual-ring data.

When, for example, audio annual-ring data at the highest priority is used as a reference, video annual-ring data having video annual-ring size Tₛᵥ identical to audio annual-ring size Tₛₐ is periodically recorded on the optical disk 11 in a predetermined pattern identical to that for audio annual-ring data. In other words, after audio annual-ring data at a playback time is recorded, video annual-ring data at a similar playback time is recorded following the audio annual-ring data.

Low-resolution annual-ring data having low-resolution annual-ring size Tₛₗ which is the double of audio annual-ring size Tₛₐ is periodically recorded on the optical disk 11 in a predetermined pattern which is double that for audio annual-ring data. In other words, for low-resolution annual-ring data at a playback time, there are pieces of audio annual-ring data at two playback times formed by bisecting the playback time, and the low-resolution annual-ring data is recorded after the pieces of audio annual-ring data at the two playback times are recorded.

Meta annual-ring data having meta annual-ring size Tₛₘ which is the double of audio annual-ring size Tₛₐ is also periodically recorded in a predetermined pattern which is double that for audio annual-ring data. In other words, for meta annual-ring data at a playback time, there are pieces of audio annual-ring data at two playback times formed by bisecting the playback time, and the meta annual-ring data is recorded after the pieces of audio annual-ring data at the two playback times are recorded.

Accordingly, as shown in Fig. 27, the audio annual-ring data #1 to #4 shown in Fig. 23, the video annual-ring data #1 to #4 shown in Fig. 24, the low-resolution annual-ring data #1 and #2 shown in Fig. 25, and the meta annual-ring data #1 and #2 shown in Fig. 26 are recorded on the optical disk 11 from its inner to outer circumference in the order of audio annual-ring data #1, video annual-ring data #1, audio annual-ring data #2, video annual-ring data #2, low-resolution annual-ring data #1, meta annual-ring data #1, audio annual-ring data #3, video annual-ring data #3, audio annual-ring data #4, video annual-ring data #4, low-resolution annual-ring data #2, meta annual-ring data #2, etc.

In the examples in Figs. 22 to 27, video annual-ring size Tₛᵥ and audio annual-ring size Tₛₐ are set to be equal to each other, and each of low-resolution annual-ring size Tₛₗ and meta annual-ring size Tₛₘ is set to be the double of audio annual-ring size Tₛₐ. However, relationships among audio annual-ring size Tₛₐ, video annual-ring size Tₛᵥ, low-resolution annual-ring size Tₛₗ, and meta annual-ring size Tₛₘ are not limited to the above. In other words, relationships among audio annual-ring size Tₛₐ, video annual-ring size Tₛᵥ, low-resolution annual-ring size Tₛₗ, and meta annual-ring size Tₛₘ can be set, for example, to identical periods, or to different periods.

In addition, audio annual-ring size Tₛₐ, video annual-ring size Tₛᵥ, low-resolution annual-ring size Tₛₗ, and meta annual-ring size Tₛₘ can be set for matching, for example, uses and purposes of use of the optical disk 11.

For example, each of low-resolution annual-ring size Tₛₗ and meta annual-ring size Tₛₘ can be set to be greater than each of audio annual-ring size Tₛₐ and video annual-ring size Tₛᵥ.

When low-resolution annual-ring size Tₛₗ is set to be greater than audio annual-ring size Tₛₐ and video annual-ring size Tₛᵥ, for example, when low-resolution annual-ring size Tₛₗ is set to 10 seconds, while audio annual-ring size Tₛₐ and video annual-ring size Tₛᵥ are each set to 2 seconds, for example, the speed of shuttle playback based on low-resolution data and the speed of transferring low-resolution data to an external apparatus such as a computer can be increased.

In other words, low-resolution data can be read in short time from the optical disk 11 since its amount is less than that of main data, and low-resolution data can be used for variable speed playback such as shuttle playback since it causes a small processing load. When low-resolution annual-ring size Tₛₗ is set to a large value, the frequency of seek operations occurring when only low-resolution data is read from the optical disk 11 can be reduced. Thus, the reading of the low-resolution data from the optical disk 11 can be performed in shorter time, and when shuttle playback using the low-resolution data is performed, the speed of the shuttle playback can be increased. In addition, when low-resolution data is transferred and processed in a computer or the like, the transfer speed (the period required for transfer) can be increased.

When meta annual-ring size Tₛₘ is set to be greater than audio annual-ring size Tₛₐ and video annual-ring size Tₛᵥ, for example, when meta annual-ring size Tₛₘ is set to 20 seconds, while audio annual-ring size Tₛₐ and video annual-ring size Tₛᵥ are each set to 2 seconds, only meta data can be read in short time, similarly to the case in which low-resolution annual-ring size Tₛₗ is set to be greater. Therefore, for example, by using a time code or the like which is included in the meta data, retrieval of a particular frame represented by a video signal as main data, etc., can be performed at high speed.

By setting low-resolution annual-ring size Tₛₗ to be greater when it is required that shuttle playback and transfer to the exterior of low-resolution data be performed, and by setting meta annual-ring size Tₛₘ to be greater when it is required that frame retrieval be performed at high speed, the optical disk 11, which has high convenience coping with the requirements, can be provided.

As described above, by setting low-resolution annual-ring size Tₛₗ or meta annual-ring size Tₐₘ to be greater, the time required for reading (also the time for writing) a particular data series such as low-resolution data or meta data can be reduced.

Accordingly, when audio annual-ring size Tₛₐ or video annual-ring size Tₛᵥ is set to be greater, the time required for reading (also writing) audio data or video data as main data can be reduced. As a result, in the case of performing, so-called "audio visual (AV) split editing" that edits only audio data or video data, the speed of the editing can be increased.

In the case of playing back video and audio, to start the playback, both video data at each playback time and audio data associated with the video data must be awaited. When audio annual-ring size Tₛₐ or video annual-ring size Tₛᵥ is set to be greater, either audio data having the grater audio annual-ring size Tₛₐ or video data having the greater video annual-ring size Tₛᵥ must be read and the other must be read thereafter, so that the time for awaiting video data at a playback time and video data associated with the video data increases, thus increasing delay time from the commanding of playback until the start of actual playback. Also, in order that video data at a playback time and audio data associated with the video data may be simultaneously played back, one of the greater audio annual-ring size Tₛₐ and the greater video annual-ring size Tₛᵥ, which is firstly read, must be stored in the memory 18, at least until reading of the other one is initiated. Accordingly, when the greater audio annual-ring size Tₛₐ or the greater video annual-ring size Tₛᵥ is used, the memory 18 must have a larger storage capacity, in addition to an increase in the delay time until the start of playback.

Therefore, it is preferable that audio annual-ring size Tₛₐ and video annual-ring size Tₛᵥ be determined in view of the delay time until the start of playback and an allowable storage capacity of the memory 18.

Since low-resolution data and meta data each have a sufficiently smaller amount of data than that of audio data or video data, if low-resolution annual-ring size Tₛₗ or meta annual-ring size Tₛₘ is set to be greater, the required addition to the storage capacity of the memory 18 does not so become an issue compared with the case of setting audio annual-ring size Tₛₐ or video annual-ring size Tₛᵥ to be greater.

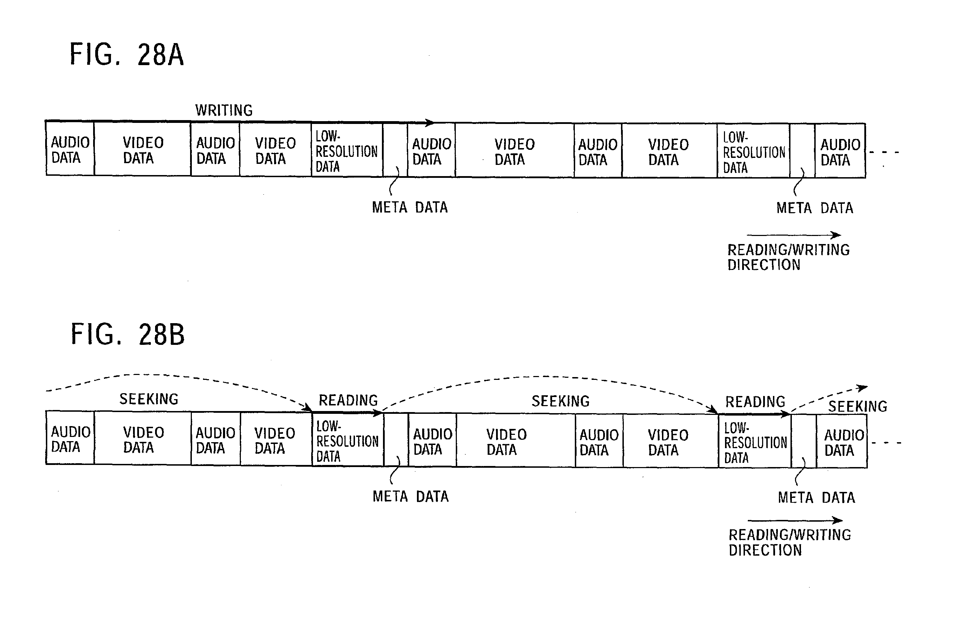

Next, Figs. 28A and 28B show states in which data the disk recording/playback apparatus 10 reads or writes data on the optical disk 11. In Figs. 28A and 28B, four data series, that is, audio data, video data, low-resolution data, and meta data, are read from or written on the optical disk 11.

In the case of writing data on the optical disk 11, when the optical disk 11 has consecutive free areas having sufficient sizes and the free areas have no defects, audio annual-ring data, video annual-ring data, low-resolution annual-ring data, and meta annual-ring data which are respectively extracted from the data series of audio data, video data, low-resolution data, and meta data are written in free areas on the optical disk 11 in sequential form, as shown in Fig. 28A. Audio annual-ring data, video annual-ring data, low-resolution annual-ring data, and meta annual-ring data each have the amount of data which is an integral multiple of the amount of data in one sector on the optical disk 11. The writing is performed so that data boundaries match sector boundaries.

When a particular data series is read from the optical disk 11, as shown in Fig. 28B, seeking of a position in which data of the data series is recorded, and reading of the data are repeatedly performed. Fig. 28B shows that only low-resolution data is read.

As described above, audio annual-ring data, video annual-ring data, low-resolution annual-ring data, and meta annual-ring data each have the amount of data which is an integral multiple of the amount of data in one sector on the optical disk 11, and are recorded so that data boundaries match sector boundaries. Thus, when, among audio annual-ring data, video annual-ring data, low-resolution annual-ring data, and meta annual-ring data, only particular data is needed, the particular data can be read without reading other data.

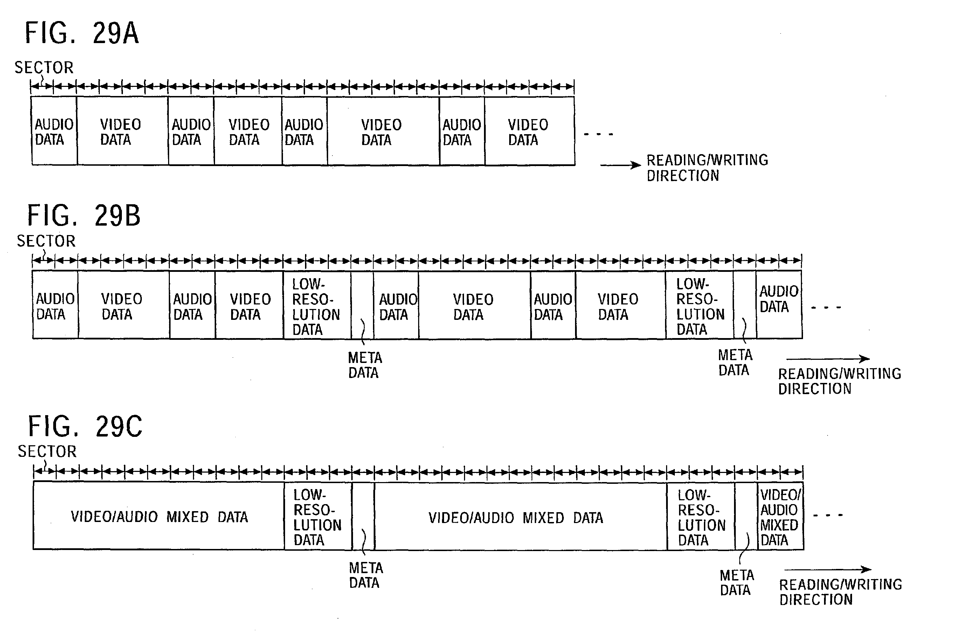

Although the case in Fig. 29A in which two data series of audio data and video data are recorded on the optical disk 11, and the case in Fig. 29B in which four data series of audio data, video data, low-resolution data, and meta data are recorded on the optical disk 11 have been described, other data series of numerals and contents can be recorded on the optical disk 11. For example, as shown in Fig. 29C, three data series of video/audio mixed data formed by multiplexing audio data and video data, for example, for each frame, low-resolution data, and meta data can be recorded.

In this embodiment, the memory controller 17 extracts audio annual-ring data by reading, for each time which is an integral multiple of audio annual-ring size Tₛₐ, the maximum of audio data which can be read from the memory 18 and which is an integral multiple of the amount of data in a physical unit area such as a sector. In other words, at a time which is an integral multiple of audio annual-ring size Tₛₐ, when the memory 18 stores the amount of audio data which is greater than the amount of data in N sectors and is less than the amount of data in (N+1) sectors, audio data having the amount of data in N sectors is extracted as audio annual-ring data. In addition, for example, after a time which is an integral multiple of audio annual-ring size Tₛₐ, and audio data having the amount of data in (N+1) or more sectors is stored in the memory 18, by reading audio data having the amount of data in (N+1) sectors, audio annual-ring data can be extracted. This similarly applies to video annual-ring data, low-resolution annual-ring data, and meta annual-ring data. The amount of annual-ring data may be a value which is an integral multiple of the amount of data in a physical unit area and which is close to the amount of data required for playback in a playback period set as audio annual-ring size or the like.

All the components of meta data can be included in meta annual-ring data, and only some of the components can be included in the meta annual-ring data and the other components can be recorded separately from the meta annual-ring data. Specifically, the meta data is divided into components for use in retrieving a video signal frame or the like, such as a time code, and the other components. The components for use in retrieval can be collectively recorded, for example, in inner circumferences of the optical disk 11, and the other components can be periodically recorded in a predetermined pattern on the optical disk 11, with them included in the meta annual-ring data. In this case, the collectively recording of the components for use in retrieval enables a reduction in the time required for retrieval.

All the components of meta data may be collectively recorded in inner circumferences, etc., of the optical disk 11. However, when all the components of meta data are recorded in inner circumferences, etc., of the optical disk 11, recording of a data series other than the meta data must be awaited, or all the components of meta data must be stored until recording of a data series other than the meta data ends. Conversely, when components of the meta data which can be used for retrieval are collectively recorded on the optical disk 11, compared with the case of recording all the components of the meta data on the optical disk 11, the time for awaiting the data series other than the meta data can be reduced, or the amount of meta data which must be stored until the recording of the data series other than the meta data ends can be reduced.

In this embodiment, the amount of annual-ring data such as audio annual-ring data is set to be a value which is an integral multiple of the amount of data in one physical unit area such as a sector, and the annual-ring data is recorded on the optical disk 11 so that the boundaries of the annual-ring data match the boundaries of the physical unit area. However, the amount of annual-ring data may be a value different from a value which is an integral multiple of the amount of data in one physical unit area, and the annual-ring data may be recorded on the optical disk 11 without matching its boundaries with the boundaries of the physical unit area. In this case, one sector can include data of different data series in mixed form.

In addition, the present invention may be applied to a disk recording medium other than an optical disk.

Although the above-described consecutive processing can be implemented by hardware, it can be implemented by software. In the case of using software to implement the consecutive processing, by installing programs constituting the software into a computer, and executing the programs in the computer, the above-described disk recording/playback apparatus 10 is functionally realized.

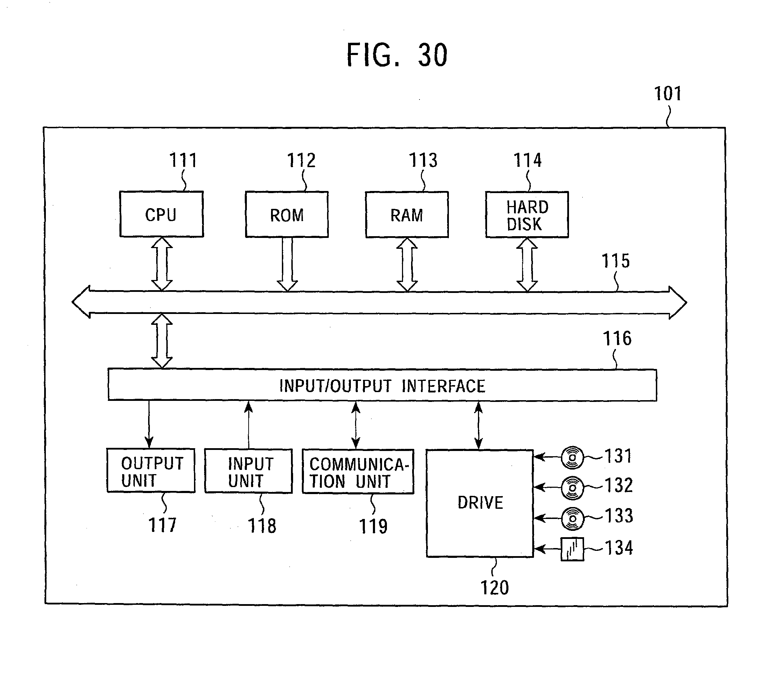

Fig. 30 is a block diagram showing an embodiment of a computer 101 functioning as the above disk recording/playback apparatus 10. An input/output interface 116 is connected to a central processing unit (CPU) 111 by a bus 115. When a command is input from an input unit 118 including a keyboard and a mouse by the user, the CPU 111 loads, into a random access memory (RAM) 113, a program stored in a recording medium such as a read-only memory (ROM) 112, a hard disk 114, or one of a magnetic disk 131, an optical disk 133, a magneto-optical disk 133, and a semiconductor memory 134 which is set in a drive 120. The CPU 111 executes the loaded program. This performs the above-described processes. The CPU 111 outputs the result of processing to an output unit 117 including a liquid crystal display by using, for example, the input/output interface 116, if needed. The program is stored in the hard disk 114 or the ROM 112 beforehand, and it can be provided in integrated form with the computer 101. Also, the program can be provided as package media such as the magnetic disk 131, the optical disk 133, or the semiconductor memory 134, and can be provided from a satellite or network (not shown) to the hard disk 114 through a communication unit 119.

In the present Specification, steps constituting the program definitely include processes time-sequentially executed in the orders shown in the above flowcharts, and also include processes which are not always time-sequentially executed and which are executed in parallel or separately.

As described above, according to the above embodiments, recording medium convenience can be improved, such as rapid editing.

Various respective aspects and features of the invention are defined in the appended claims. Features from the dependent claims may be combined with features of the independent claims as appropriate and not merely as explicitly set out in the claims.

## Claims

1. A recording control apparatus for controlling recording of two or more data series on a recording medium, comprising:
data extraction means for extracting, from said two or more data series, predetermined amounts of data each of which is an integral multiple of the amount of data in one physical unit area on said recording medium; and
recording control means for controlling recording, on said recording medium, of the predetermined amounts of data from said two or more data series so that the boundaries of each of the predetermined amounts of data match the boundaries of the physical unit area, and so that the predetermined amounts of data are disposed in a predetermined pattern.

2. A recording control apparatus according to claim 1, wherein each of the predetermined amounts of data, which is an integral multiple of the amount of data in one physical unit area on said recording medium, is close to the amount of data required for playback in a predetermined playback period.

3. A recording control apparatus according to claim 2, wherein said predetermined playback period differs from one data series to another data series among said two or more data series.

4. A recording control apparatus according to claim 1, further comprising padding data adding means which generates an amount of data which is an integral multiple of the amount of data in one physical unit area on said recording medium by adding padding data to data remaining after said data extraction means extracts the predetermined amount of data from each of said two or more data series.

5. A recording control apparatus according to claim 1, wherein said two or more data series are related to each other.

6. A recording control apparatus according to claim 5, wherein said two or more data series include at least two data series constituted by pictures and audio associated with said pictures.

7. A recording control apparatus according to claim 5, wherein said two or more data series include at least two data series constituted by predetermined pictures and reduced pictures generated by reducing the amounts of data constituting said predetermined pictures.

8. A recording control apparatus according to claim 7, further comprising picture generating means for generating said reduced pictures from said predetermined pictures.

9. A recording control apparatus according to claim 5, wherein said two or more data series include at least two data series constituted by pictures and meta data concerning said pictures.

10. A recording control apparatus according to claim 1, wherein:
said two or more data series include at least two data series among a data series of predetermined pictures, a data series of audio associated with said predetermined pictures, a data series of reduced pictures generated by reducing the amounts of data constituting said predetermined pictures, and a data series of meta data concerning said predetermined pictures;
each predetermined amount of data, which is an integral multiple of the amount of data in one physical unit area on said recording medium, is close to the amount of data required for playback in a predetermined playback period; and
said predetermined playback period differs from one data series to another data series among the data series of predetermined pictures, the data series of audio, the data series of reduced pictures, and the data series of meta data.

11. A recording control apparatus according to claim 1, wherein the physical unit area is one of at least one minimum area in which data can be read from or written on said recording medium, and at least one error-correcting-code block in which data in a unit for error-correcting-code processing is recorded.

12. A recording control apparatus for controlling recording of two or more data series on a recording medium, comprising:
a data extractor for extracting, from said two or more data series, predetermined amounts of data each of which is an integral multiple of the amount of data in one physical unit area on said recording medium; and
a recording controller for controlling recording, on said recording medium, of the predetermined amounts of data from said two or more data series so that the boundaries of each of the predetermined amounts of data match the boundaries of the physical unit area, and so that the predetermined amounts of data are disposed in a predetermined pattern.

13. A recording control apparatus according to claim 12, wherein each of the predetermined amounts of data, which is an integral multiple of the amount of data in one physical unit area on said recording medium, is close to the amount of data required for playback in a predetermined playback period.

14. A recording control apparatus according to claim 13, wherein said predetermined playback period differs from one data series to another data series among said two or more data series.

15. A recording control apparatus according to claim 12, further comprising a padding data adder which generates an amount of data which is an integral multiple of the amount of data in one physical unit area on said recording medium by adding padding data to data remaining after said data extractor extracts the predetermined amount of data from each of said two or more data series.

16. A recording control apparatus according to claim 12, wherein said two or more data series are related to each other.

17. A recording control apparatus according to claim 16, wherein said two or more data series include at least two data series constituted by pictures and audio associated with said pictures.

18. A recording control apparatus according to claim 16, wherein said two or more data series include at least two data series constituted by predetermined pictures and reduced pictures generated by reducing the amounts of data constituting said predetermined pictures.

19. A recording control apparatus according to claim 18, further comprising a picture generator for generating said reduced pictures from said predetermined pictures.

20. A recording control apparatus according to claim 16, wherein said two or more data series include at least two data series constituted by pictures and meta data concerning said pictures.

21. A recording control apparatus according to claim 12, wherein:
said two or more data series include at least two data series among a data series of predetermined pictures, a data series of audio associated with said predetermined pictures, a data series of reduced pictures generated by reducing the amounts of data constituting said predetermined pictures, and a data series of meta data concerning said predetermined pictures;
each predetermined amount of data, which is an integral multiple of the amount of data in one physical unit area on said recording medium, is close to the amount of data required for playback in a predetermined playback period; and
said predetermined playback period differs from one data series to another data series among the data series of predetermined pictures, the data series of audio, the data series of reduced pictures, and the data series of meta data.

22. A recording control apparatus according to claim 12, wherein the physical unit area is one of at least one minimum area in which data can be read from or written on said recording medium, and at least one error-correcting-code block in which data in a unit for error-correcting-code processing is recorded.

23. A recording control method for controlling recording of two or more data series on a recording medium, comprising the steps of:
extracting, from said two or more data series, predetermined amounts of data each of which is an integral multiple of the amount of data in one physical unit area on said recording medium; and
controlling recording, on said recording medium, of the predetermined amounts of data from said two or more data series so that the boundaries of each of the predetermined amounts of data match the boundaries of the physical unit area, and so that the predetermined amounts of data are disposed in a predetermined pattern.

24. A recording control method according to claim 23, wherein each of the predetermined amounts of data, which is an integral multiple of the amount of data in one physical unit area on said recording medium, is close to the amount of data required for playback in a predetermined playback period.

25. A recording control method according to claim 24, wherein said predetermined playback period differs from one data series to another data series among said two or more data series.

26. A recording control method according to claim 23, further comprising the step of generating an amount of data which is an integral multiple of the amount of data in one physical unit area on said recording medium by adding padding data to data remaining after the predetermined amount of data is extracted from each of said two or more data series in the extracting step.

27. A recording control method according to claim 23, wherein said two or more data series are related to each other.

28. A recording control method according to claim 27, wherein said two or more data series include at least two data series constituted by pictures and audio associated with said pictures.

29. A recording control method according to claim 27, wherein said two or more data series include at least two data series constituted by predetermined pictures and reduced pictures generated by reducing the amounts of data constituting said predetermined pictures.

30. A recording control method according to claim 29, further comprising the step of generating said reduced pictures from said predetermined pictures.

31. A recording control method according to claim 27, wherein said two or more data series include at least two data series constituted by pictures and meta data concerning said pictures.

32. A recording control method according to claim 23,
said two or more data series include at least two data series among a data series of predetermined pictures, a data series of audio associated with said predetermined pictures, a data series of reduced pictures generated by reducing the amounts of data constituting said predetermined pictures, and a data series of meta data concerning said predetermined pictures;
each predetermined amount of data, which is an integral multiple of the amount of data in one physical unit area on said recording medium, is close to the amount of data required for playback in a predetermined playback period; and
said predetermined playback period differs from one data series to another data series among the data series of predetermined pictures, the data series of audio, the data series of reduced pictures, and the data series of meta data.

33. A recording control method according to claim 23, wherein the physical unit area is one of at least one minimum area in which data can be read from or written on said recording medium, and at least one error-correcting-code block in which data in a unit for error-correcting-code processing is recorded.

34. A program for causing a computer to perform recording control processing for controlling recording of two or more data series on a recording medium, said program comprising the steps of:
extracting, from said two or more data series, predetermined amounts of data each of which is an integral multiple of the amount of data in one physical unit area on said recording medium; and
controlling recording, on said recording medium, of the predetermined amounts of data from said two or more data series so that the boundaries of each of the predetermined amounts of data match the boundaries of the physical unit area, and so that the predetermined amounts of data are disposed in a predetermined pattern.

35. A recording medium having two or more data series recorded thereon, wherein predetermined amounts of data which are extracted from said two or more data series and each of which is an integral multiple of the amount of data in one physical unit area on said recording medium are recorded so that the boundaries of each of the predetermined amounts of data match the boundaries of the physical unit area, and so that the predetermined amounts of data are disposed in a predetermined pattern.

36. A recording medium according to claim 35, wherein each of the predetermined amounts of data, which is an integral multiple of the amount of data in one physical unit area on said recording medium, is close to the amount of data required for playback in a predetermined playback period.

37. A recording medium according to claim 36, wherein said predetermined playback period differs from one data series to another data series among said two or more data series.

38. A recording medium according to claim 35, wherein said two or more data series are related to each other.

39. A recording medium according to claim 38, wherein said two or more data series include at least two data series constituted by pictures and audio associated with said pictures.

40. A recording medium according to claim 38, wherein said two or more data series include at least two data series constituted by predetermined pictures and reduced pictures generated by reducing the amounts of data constituting said predetermined pictures.

41. A recording medium according to claim 38, wherein said two or more data series include at least two data series constituted by pictures and meta data concerning said pictures.

42. A recording medium according to claim 35, wherein:
said two or more data series include at least two data series among a data series of predetermined pictures, a data series of audio associated with said predetermined pictures, a data series of reduced pictures generated by reducing the amounts of data constituting said predetermined pictures, and a data series of meta data concerning said predetermined pictures;
each predetermined amount of data, which is an integral multiple of the amount of data in one physical unit area on said recording medium, is close to the amount of data required for playback in a predetermined playback period; and
said predetermined playback period differs from one data series to another data series among the data series of predetermined pictures, the data series of audio, the data series of reduced pictures, and the data series of meta data.

43. A recording medium according to claim 35, wherein the physical unit area is one of at least one minimum area in which data can be read from or written on said recording medium, and at least one error-correcting-code block in which data in a unit for error-correcting-code processing is recorded.

44. A recording control apparatus for controlling recording of a first data series and a second data series on a recording medium, comprising:
first data extraction means for extracting, from said first data series, a first amount of data based on the amount of data required for playback in a first playback period;
second data extraction means for extracting, from said second data series, a second amount of data based on the amount of data required for playback in a second playback period different from said first playback period; and
recording control means for controlling recording, on said recording medium, of the first amount of data from said first data series and the second amount of data from said second data series in a predetermined pattern.

45. A recording control apparatus according to claim 44, wherein:
the first amount of data is an integral multiple of the amount of data in one physical unit area on said recording medium, and is close to the amount of data required for playback in said first playback period; and
the second amount of data is an integral multiple of the amount of data in one physical unit area on said recording medium, and is close to the amount of data required for playback in said second playback period.

46. A recording control apparatus according to claim 45, wherein the physical unit area is one of a minimum area in which data can be read from or written on said recording medium, and an area in which an error-correcting-code block for use in error-correcting-code processing is recorded.

47. A recording control apparatus according to claim 44, wherein said recording control means controls the recording on said recording medium so that the boundaries of each of the first amount of data from said first data series and the second amount of data from said second data series match the boundaries of one physical unit area on said recording medium.

48. A recording control apparatus according to claim 47, wherein the physical unit area is one of a minimum area in which data can be read from or written on said recording medium, and an area in which an error-correcting-code block for use in error-correcting-code processing is recorded.

49. A recording control apparatus according to claim 44, wherein said first data series and said second data series are related to each other.

50. A recording control apparatus according to claim 49, wherein:
said first data series is a data series of pictures or audio associated with said pictures; and
said second data series is one of a data series of pictures generated by reducing the amount of data constituting said pictures, and a data series of audio generated by reducing the amount of data constituting said audio associated with said pictures.

51. A recording control apparatus according to claim 50, further comprising generating means for generating, from the data series of pictures or audio, one of the generated data series of pictures and the generated data series of audio.

52. A recording control apparatus according to claim 49, wherein:
said first data series is a data series of pictures or audio associated with the pictures; and
said second data series is a data series of meta data concerning the pictures or the audio associated with the pictures.

53. A recording control apparatus for controlling recording of a first data series and a second data series on a recording medium, comprising:
a first data extractor for extracting, from said first data series, a first amount of data based on the amount of data required for playback in a first playback period;
a second data extractor for extracting, from said second data series, a second amount of data based on the amount of data required for playback in a second playback period different from said first playback period; and
a recording controller for controlling recording, on said recording medium, of the first amount of data from said first data series and the second amount of data from said second data series in a predetermined pattern.

54. A recording control apparatus according to claim 53, wherein:
the first amount of data is an integral multiple of the amount of data in one physical unit area on said recording medium, and is close to the amount of data required for playback in said first playback period; and
the second amount of data is an integral multiple of the amount of data in one physical unit area on said recording medium, and is close to the amount of data required for playback in said second playback period.

55. A recording control apparatus according to claim 54, wherein the physical unit area is one of a minimum area in which data can be read from or written on said recording medium, and an area in which an error-correcting-code block for use in error-correcting-code processing is recorded.

56. A recording control apparatus according to claim 53, wherein said recording controller controls the recording on said recording medium so that the boundaries of each of the first amount of data from said first data series and the second amount of data from said second data series match the boundaries of one physical unit area on said recording medium.

57. A recording control apparatus according to claim 56, wherein the physical unit area is one of a minimum area in which data can be read from or written on said recording medium, and an area in which an error-correcting-code block for use in error-correcting-code processing is recorded.

58. A recording control apparatus according to claim 53, wherein said first data series and said second data series are related to each other.

59. A recording control apparatus according to claim 58, wherein:
said first data series is a data series of pictures or audio associated with said pictures; and
said second data series is one of a data series of pictures generated by reducing the amount of data constituting said pictures and a data series of audio generated by reducing the amount of data constituting said audio.

60. A recording control apparatus according to claim 59, further comprising a generator for generating, from the data series of pictures or audio, one of the generated data series of pictures and the generated data series of audio.

61. A recording control apparatus according to claim 58, wherein:
said first data series is a data series of pictures or audio associated with the pictures; and
said second data series is a data series of meta data concerning the pictures or the audio associated with the pictures.

62. A recording control method for controlling recording of a first data series and a second data series on a recording medium, comprising the steps of:
extracting, from said first data series, a first amount of data based on the amount of data required for playback in a first playback period;
extracting, from said second data series, a second amount of data based on the amount of data required for playback in a second playback period different from said first playback period; and
controlling recording, on said recording medium, of the first amount of data from said first data series and the second amount of data from said second data series in a predetermined pattern.

63. A program for causing a computer to perform controlling recording of a first data series and a second data series on a recording medium, said program comprising the steps of:
extracting, from said first data series, a first amount of data based on the amount of data required for playback in a first playback period;
extracting, from said second data series, a second amount of data based on the amount of data required for playback in a second playback period different from said first playback period; and
controlling recording, on said recording medium, of the first amount of data from said first data series and the second amount of data from said second data series in a predetermined pattern.

64. A recording medium having first and second data series recorded thereon, wherein a first amount of data which is extracted from the first data series and which is based on the amount of data required for playback in a first playback period, and a second amount of data which is extracted from the second data series and which is based on the amount of data required for playback in a second playback period different from said first playback period are recorded in a predetermined pattern on said recording medium.
